(19) Europäisches Patentamt
European Patent Office
Office européen des brevets

(11) **EP 3 550 752 B1**

(12) **EUROPEAN PATENT SPECIFICATION**

(45) Date of publication and mention
of the grant of the patent:
**12.10.2022 Bulletin 2022/41**

(21) Application number: **18744155.5**

(22) Date of filing: **22.01.2018**

(51) International Patent Classification (IPC):
**H04L 1/16** *(2006.01)*  **H04L 1/18** *(2006.01)*

(52) Cooperative Patent Classification (CPC):
**H04L 1/1829; H04L 1/16; H04L 1/1607**

(86) International application number:
**PCT/CN2018/073654**

(87) International publication number:
**WO 2018/137584 (02.08.2018 Gazette 2018/31)**

(54) **METHOD DEVICE AND SYSTEM FOR FEEDBACK**

VERFAHREN, VORRICHTUNG UND SYSTEM FEEDBACK

PROCÉDÉ, DISPOSITIF, ET SYSTÈME DE RÉTROACTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.01.2017 CN 201710061738**
**02.06.2017 CN 201710409456**

(43) Date of publication of application:
**09.10.2019 Bulletin 2019/41**

(73) Proprietor: **Huawei Technologies Co., Ltd.**
**Longgang District**
**Shenzhen, Guangdong 518129 (CN)**

(72) Inventors:
• **PENG, Jinlin**
**Shenzhen**
**Guangdong 518129 (CN)**
• **DONG, Pengpeng**
**Shenzhen**
**Guangdong 518129 (CN)**
• **TANG, Hao**
**Shenzhen**
**Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**CN-A- 101 034 959    CN-A- 103 098 405**
**US-A1- 2006 034 277    US-A1- 2013 003 675**

• **MEDIA TEK INC: "Discussion on multiple HARQ-ACK/NACK bits per TB", 3GPP TSG RAN WG1 R1-1700165, AH NR Meeting, 20 January 2017 (2017-01-20), XP055529442,**

**Description**

**TECHNICAL FIELD**

This application relates to wireless communications technologies, and in particular, to a communication method for feeding back whether data is correctly received, a device, and a system.

**BACKGROUND**

In a long term evolution (long term evolution, LTE) system, to ensure data transmission reliability, a hybrid automatic repeat request (hybrid automatic repeat request, HARQ) mechanism is introduced. Transmitted data may be correspondingly a transport block (transmit block, TB) at a physical layer, and a transmit end adds a cyclic redundancy check (cyclic redundancy check, CRC) to the TB, so that a receive end checks whether the TB is successfully received. The TB may be divided into several code blocks (code block, CB) based on a size of the TB. The transmit end further adds a corresponding CRC to each CB, so that the receive end checks whether each CB is successfully received. After the data is sent, the receive end attempts to decode the received data. If checks of the CRCs of all the CBs succeed and a check of the CRC of the TB succeeds, a 1-bit acknowledgement (acknowledgement, ACK) is fed back to the transmit end, to indicate that the data is successfully received. If a check of a CRC of a CB fails or a check of the CRC of the TB fails, a 1-bit negative acknowledgement (negative acknowledgement, NACK) is fed back to the transmit end, to indicate that the data fails to be received. In this case, the transmit end needs to retransmit the entire TB.

When the foregoing technology is used, the entire TB still needs to be retransmitted in a scenario in which only several CBs fail to be received, resulting in low communication efficiency. Therefore, with development of communications technologies, a method in which a plurality of bits each are used to feed back whether each CB is successfully received is considered. In this way, the transmit end needs to retransmit only a CB corresponding to a feedback bit of which content is a negative acknowledge.

However, if the method in which a plurality of bits are used for feedback is used, feedback overheads certainly increase drastically. US 2006/034277 A1 describes a block ACK message having a hierarchical bitmap structure and including a block ACK starting sequence field and a bitmap field. The bitmap field consist of an SN level bitmap field and an erroneous SN packet bitmap field. The erroneous SN packet bitmap field includes a plurality of ACK report fields (M*m ACK fields). Here, 'm' corresponds to the number of zeros ('0') set to the SN level bitmap field. 'M' is the number of unsuccessfully received SN level packets.

**SUMMARY**

Embodiments of the present invention provide a feedback method according to claim 1 in a communications system, and a first and a second device according to the other independent claims wherein the first and the second device belong to the communications system. Further embodiments of the present invention are specified in the dependent claims. Each of the subsequently described aspects and embodiments of this application is to be considered an embodiment of the invention if, and only if, it falls under the scope of any of the appended claims.

According to an aspect, an embodiment of this application provides a feedback method in a communications system, where the method includes:
sending, by a first device, data to a second device; receiving, by the first device, the data sent by the second device; sending, by the first device to the second device, feedback information indicating whether the data is successfully received, where a quantity of bits of the feedback information is associated with a size of a transmission time unit in the communications system; and receiving, by the second device, the feedback information. Either the communications system is an LTE system and transmission time unit is a transmission time interval, TTI, or the communications system is an NR/5G system and the transmission time unit is a slot, a time domain symbol, or a mini slot including one or more time domain symbols, or integrates a plurality of slots or mini slots. When an additional demodulation reference signal DRMS or a DMRS with a high time domain density is not configured for the first device, the feedback information uses 1 bit.

In the above cases, channel fluctuation is minor for the data. In other words, impact of channels on the data is basically consistent. Therefore, using 1 bit for feedback can reduce system overheads.

When the additional DRMS or the DMRS with the high time domain density is configured for the first device, the feedback information uses a plurality of bits. In the above cases, channel fluctuation is violent in a transmission process of the data, or impact of channel quality on different segments of the data is probably different. Therefore, a plurality of bits is used for feedback. In this way, the second device needs to retransmit only a data part that is not correctly received according to feedback of the first device, and does not need to retransmit a correctly received part of the data.

By using the foregoing method, the quantity of bits of the feedback information is determined based on the size of the transmission time unit. This flexibly implements a compromise between transmission efficiency and feedback overheads in the communications system, thereby improving performance of the entire communications system.

In a possible design, the size of the transmission time unit is determined by at least one of the following parameters: a subcarrier spacing of the communications system and a quantity of time domain symbols in the transmission time unit.

According to another aspect, an embodiment of this application provides a feedback method, including: sending, by a second device, L transport blocks to a first device, where L is an integer greater than or equal to 1; receiving, by the first device, the L transport blocks sent by the second device; sending, by the first device to the second device, feedback information indicating whether the L transport blocks are successfully received, where a quantity of bits of the feedback information is associated with a parameter of a control message; and receiving, by the second device, the feedback information.

By using the foregoing method, the quantity of bits of the feedback information is determined based on the parameter of the control message. This flexibly implements a compromise between transmission efficiency and feedback overheads in a communications system, thereby improving performance of the entire communications system.

In a possible design, the parameter of the control message is a codebook size of the feedback information; $N_i$ is an original quantity of feedback bits corresponding to an $i^{th}$ transport block in the L transport blocks, where i is an integer that meets $1 \leq i \leq L$, and $N_i$ is an integer greater than or equal to 1; and when $\sum_{1 \leq i \leq L} N_i$ is greater than the codebook size, the quantity of bits of the feedback information is L, and each of the L transport blocks corresponds to 1 feedback bit; or when $\sum_{1 \leq i \leq L} N_i$ is less than or equal to the codebook size, the feedback information uses $\sum_{1 \leq i \leq L} N_i$ bits.

In another possible design, the parameter of the control message is a capacity of the control message, and the control message includes the feedback information and other information sent by the first device to the second device; $N_i$ is an original quantity of feedback bits corresponding to an $i^{th}$ transport block in the L transport blocks, where i is an integer that meets $1 \leq i \leq L$, and $N_i$ is an integer greater than or equal to 1; a quantity of bits that the other information needs to occupy is K, where K is a positive integer; and when $(\sum_{1 \leq i \leq L} N_i + K)$ is greater than the capacity of the control message, the feedback information uses L bits, and each of the L transport blocks corresponds to 1 feedback bit; or when $(\sum_{1 \leq i \leq L} N_i + K)$ is less than or equal to the capacity of the control message, the feedback information uses $\sum_{1 \leq i \leq L} N_i$ bits.

In another possible design, the parameter of the control message is a channel that carries the control message; and

when the control message is carried on a short physical uplink control channel short PUCCH, the feedback information uses L bits, and each of the L transport blocks corresponds to 1 feedback bit; or when the control message is carried on a long physical uplink control channel long PUCCH or a physical uplink shared channel PUSCH, in the quantity of bits of the feedback information, each transport block in the L transport blocks corresponds to at least one feedback bit.

In all the foregoing designs, the quantity of bits of the feedback information needs to be determined on a premise that requirements of the communications system are met, to prevent a communication error in a communication process of the system caused by unmet requirements of the system.

According to another aspect, an embodiment of this application provides a feedback method in a communications system, where the method includes:

sending, by a second device, at least one code block to a first device; receiving, by the first device, the at least one code block sent by the second device; sending, by the first device to the second device, feedback information that is corresponding to the at least one code block, where a quantity of bits of the feedback information is associated with whether some data corresponding to the at least one code block is affected; and receiving, by the second device, the feedback information.

By using the foregoing method, the quantity of bits of the feedback information is determined based on whether some data corresponding to the at least one code block is affected. This flexibly implements a compromise between transmission efficiency and feedback overheads in the communications system, thereby improving performance of the entire communications system.

In a possible design, when some data corresponding to the at least one code block is affected, the feedback information uses a plurality of bits.

In another possible design, the at least one code block is a plurality of code blocks, and that the feedback information uses a plurality of bits includes: the feedback information uses a plurality of bits, where at least one bit is used to indicate whether an unaffected code block in the plurality of code blocks is successfully received, and at least one other bit is used to indicate whether an affected code block in the plurality of code blocks is successfully received. Because a receiving failure rate of the affected code block is obviously greater than that of the unaffected code block, feedback is separately performed on the affected code block and the unaffected code block. This is more favorable for improving transmission efficiency of the system.

In another possible design, the at least one code block is one code block, the feedback information uses a plurality of bits, and the feedback information is used to indicate receive quality of the one code block.

In another possible design, the at least one code block is a plurality of code blocks, and that a quantity of bits of the feedback information is associated with whether some data corresponding to the at least one code block is affected includes: when some data corresponding to the plurality of code blocks is affected, and a bit rate of the plurality of code blocks is greater than a second threshold, an affected code block in the plurality of code block is not successfully received, the feedback information occupies 1 bit, and the 1 bit is used to indicate whether an unaffected code block in the plurality of code blocks is successfully received. In this case, the bit rate is high, and as a result, an affected part of the data certainly fails to be received. Therefore, no extra feedback is required. Optionally, in this case, the second device may immediately supplementarily transmit or retransmit the affected part of the data before the first device performs feedback.

In another possible design, the at least one code block is a plurality of code blocks, and that a quantity of bits of the feedback information is associated with whether some data corresponding to the at least one code block is affected includes: when some data corresponding to the plurality of code blocks is affected, and before the first device sends the feedback information corresponding to the at least one code block to the second device, the first device receives an affected code block retransmitted by the second device in the plurality of code blocks, the feedback information occupies 1 bit, and the 1 bit is used to indicate whether an unaffected code block in the plurality of code blocks and the retransmitted affected code block in the plurality of code blocks are successfully received. Feedback overheads can be reduced by using this manner.

According to another aspect, an embodiment of this application provides a feedback method in a communications system, where the method includes:

sending, by a first device, data to a second device; receiving, by the first device, the data sent by the second device; sending, by the first device to the second device, feedback information indicating whether the data is successfully received, where a quantity of bits of the feedback information is associated with at least one of the following parameters; and receiving, by the second device, the feedback information, where the parameters include a subcarrier spacing, a quantity of time domain symbols of a transmission time unit, a time domain Doppler parameter, a DMRS setting, a quantity of subbands for transmitting the data or a quantity of carriers for transmitting the data, whether unexpected interference, coordination, or mode switchover exists, a bit rate of the data, whether supplementary transmission or retransmission is performed before the feedback information is sent, and a TBS.

Optionally, when the first device is a terminal and the second device is a base station, if the first device is located on a cell edge and is a cell edge user, or coverage on the first device is limited, the feedback information may use 1 bit; or conversely, if the first device is a cell center user, or coverage on the first device is not limited, the feedback information may use a plurality of bits.

According to another aspect, an embodiment of the present invention provides an indication method, including: receiving, by a first device, control information sent by a second device, where the control information includes indication information, and the indication information is used to indicate whether a transport block TB sent by the second device to the first device uses a CBG-level feedback manner or a TB-level feedback manner; in the CBG-level feedback manner, the indication information is further used to indicate a sending status of each code block group CBG included in the TB; in the TB-level feedback manner, the first device feeds back, by using 1 bit, whether the TB is successfully received; or in the CBG-level feedback manner, the first device feeds back, by using at least one bit based on a sending status of each CBG, whether the TB is successfully received.

According to another aspect, an embodiment of the present invention provides a first device, where the first device has a function for implementing the actions of the first device in the foregoing method designs. The function may be implemented by hardware, for example, a structure of the first device includes a transceiver and a processor, or may be implemented by hardware executing related software. The hardware or software includes one or more modules corresponding to the foregoing function. The module may be software and/or hardware. Optionally, the first device may be a terminal.

According to another aspect, an embodiment of the present invention provides a second device, where the second device has a function for implementing the actions of the second device in the foregoing method designs. The function may be implemented by hardware or may be implemented by hardware executing corresponding software. The hardware or software includes one or more modules corresponding to the foregoing function. Optionally, the second device may be a base station.

According to still another aspect, an embodiment of the present invention provides a communications system, where the system includes the first device and the second device in the foregoing aspects.

According to still another aspect, an embodiment of the present invention provides a computer storage medium, configured to store a computer software instruction used by the first device, where the computer software instruction includes a program designed for executing the foregoing aspects.

According to still another aspect, an embodiment of the present invention provides a computer storage medium, configured to store a computer software instruction used by the second device, where the computer software instruction includes a program designed for executing the foregoing aspects.

## DESCRIPTION OF DRAWINGS

To describe the technical solutions in the embodiments of the present invention or in the prior art more clearly, the following briefly describes the accompanying drawings required for describing the embodiments or the prior art.

FIG. 1 shows a basic architecture of a communications system according to an embodiment of this application;

FIG. 2 is a schematic structural diagram of a terminal according to an embodiment of this application;

FIG. 3 is a schematic structural diagram of a base station according to an embodiment of this application;

FIG. 4(a) is a diagram of a relationship between a time domain resource and a channel fluctuation status according to an embodiment of this application;

FIG. 4(b) is diagram of another relationship between a time domain resource and a channel fluctuation status according to an embodiment of this application;

FIG. 5 is an interaction flowchart of a feedback method according to an embodiment of this application;

FIG. 6(a) is a diagram of another relationship between a time domain resource and a channel fluctuation status according to an embodiment of this application;

FIG. 6(b) is a diagram of still another relationship between a time domain resource and a channel fluctuation status according to an embodiment of this application; and

FIG. 7 is a schematic structural diagram of a communications device according to an embodiment of this application.

## DESCRIPTION OF EMBODIMENTS

In an LTE system, a physical layer provides a data transmission service for an upper layer by using a transmission channel. The physical layer performs a series of channel coding related processing on data from transmission channels of the upper layer according to a specified format, including cyclic redundancy check (cyclic redundancy check, CRC) computation, channel coding, code block interleaving and rate matching, code block connection, mapping to a physical-layer channel, and the like. Data of a data transmit end may be transmitted to a data receive end after undergoing the foregoing processing.

A processing process related to the CRC computation is as follows: At the data transmit end, the physical layer obtains, from a media access control (media access control, MAC) layer, data that needs to be transmitted, and the data is referred to as a transport block (Transport Block, TB). A CRC is added to the TB, so that the data receive end checks whether the TB is successfully received. The TB is segmented based on a TB size (TB size, TBS). For example, if the TBS is greater than 6144 bits, the TB is divided into a plurality of code blocks (code block, CB). Sizes of the CBs are basically consistent and are all less than or equal to 6144 bits. Then, a corresponding CRC is added to each CB, so that the data receive end checks whether each CB is successfully received. For a code block segmentation manner, refer to specific descriptions in section 5.1.2 of the 3rd Generation Partnership Project (the 3rd generation partnership project, 3GPP) technical specification (technical specification, TS) 36.212 release 14.1.1 (v14.1.1).

After receiving the data, in addition to performing operations such as inverse resource mapping and inverse rate matching that are corresponding to those of the transmit end, the data receive end further needs to decode the received data. If checks of the CRCs of all the CBs succeed and a check of the CRC of the TB succeeds, a 1-bit acknowledgement (acknowledgement, ACK) is fed back to the data transmit end, to indicate that the data is successfully received. If a check of a CRC of a CB fails or a check of the CRC of the TB fails, a 1-bit negative acknowledgement (negative acknowledgement, NACK) is fed back to the data transmit end, to indicate that the data fails to be received. In this case, the data transmit end needs to retransmit the entire TB. The ACK or the NACK may be carried in control information sent by the data receive end to the data transmit end. The foregoing process belongs to a hybrid automatic repeat request (hybrid automatic repeat request, HARQ) mechanism in the LTE system.

However, when the entire TB still needs to be retransmitted in a scenario in which only a few CBs fail to be received, low communication efficiency is caused. For example, a TB is divided into 10 CBs, but only one CB of the 10 CBs is not successfully received by the data receive end. According to the foregoing mechanism, the data transmit end retransmits all the 10 CBs of data. Apparently, the retransmission of the other nine CBs is unnecessary. A similar phenomenon becomes more severe in the future, for example, in a 5th generation 5G (which may also be referred to as New Radio (new radio, NR)) communications system. For example, NR supports a TBS increase in frequency domain, spatial domain, and time domain by using a higher transmission bandwidth, more antenna ports, slot slot aggregation transmission, or the like. Therefore, a greater TBS may come into existence in the future, and one TB may be divided into a greater quantity of CBs. If feedback is still performed according to the HARQ mechanism in LTE as the quantity of CBs increases, lower communication efficiency may be caused. For another example, in a scenario in which an ultra-reliable and low-latency communication (ultra-reliable low latency communication, URLLC) service and an enhanced mobile broadband (enhanced mobile broadband, eMBB) service coexist, in a process of sending data of the eMBB service, only data of a few CBs may be affected by the URLLC service. In other words, only a few CBs in one TB are not successfully received by the data receive end. In this case, if feedback is still performed according to the HARQ mechanism in LTE, low communication efficiency may also be caused.

With development of communications technologies, a plurality of bits are used for feedback. For example: (1) A method in which a plurality of bits each are used to feed back whether each CB is successfully received is considered. In this way, the data transmit end needs to retransmit only a CB corresponding to a feedback bit of which content is a negative acknowledge. (2) A plurality of bits are used to indicate a volume of data that needs to be retransmitted. For example, feedback information may indicate decoding quality information (decoder state information, DSI). For example, the DSI may indicate three different types of information content: ACK, NACK but almost correct receiving, or NACK with poor decoding effect during receiving. The three different types of information content may be respectively indicated by using different bit values. (3) For still another example, a plurality of bits are used to indicate CBs that are incorrectly decoded in a current TB.

However, if the method in which a plurality of bits are used for feedback is used, feedback overheads certainly increase drastically. In addition, coverage performance of a control channel that carries the feedback is also affected.

In view of this, this application provides a feedback method. The method is specifically applicable to a scenario in which a data receive end feeds back to a data transmit end whether transmitted data is correctly received, and a quantity of bits used for feedback may be determined based on different situations, thereby implementing balancing between communication efficiency and feedback overheads in a communications system.

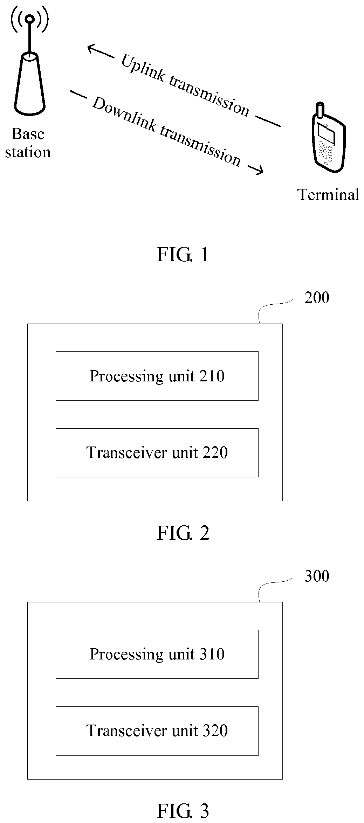

The following describes a system running environment of this application. The technologies described in this application may be applied to an LTE system or other radio communications systems that use various radio access technologies, for example, systems using access technologies such as code division multiple access (code division multiple access, CDMA), frequency division multiple access (frequency division multiple access, FDMA), time division multiple access (time division multiple access, TDMA), orthogonal frequency division multiple access (orthogonal frequency division multiple access, OFDMA), and single carrier-frequency division multiple access (single carrier-frequency division multiple access, SC-FDMA). The technologies are further applicable to future evolved systems, for example, a 5th generation 5G (which may also be referred to as NR) communications system. FIG. 1 shows a basic architecture of a communications system. A base station and a terminal may perform data or signaling transmission by using a wireless interface, including uplink transmission and downlink transmission. The terminal in this application may be a device (device) providing voice or data connectivity for a user, and may include a wired terminal and a wireless terminal. The wireless terminal may be a handheld device with a radio connection function, or another processing device connected to a radio modem, and may be a mobile terminal that communicates with one or more core networks by using a radio access network. For example, the wireless terminal may be a mobile phone, a computer, a tablet computer, a personal digital assistant (personal digital assistant, PDA), a mobile Internet device (mobile Internet device, MID), a wearable device, an e-book reader (e-book reader), or the like. For another example, the wireless terminal may also be a portable, pocket-sized, handheld, computer built-in, or in-vehicle mobile device. For another example, the wireless terminal may be a mobile station (mobile station) or an access point (access point). UE mentioned above is one type of terminal, and is a name in the LTE system. For ease of description, the devices mentioned above are collectively referred to as a terminal in the following descriptions of this application. The base station in this application is an apparatus that is deployed in a radio access network (radio access network, RAN) and that is configured to provide a radio communications function for the terminal. The base station may include various forms of macro base stations, micro base stations, relay stations, access point base station controllers, transmission reception points (transmission reception point, TRP), and the like. A specific name of the base station may vary in systems using different radio access technologies. For example, the base station is referred to as an evolved NodeB (evolved NodeB, eNB) in an LTE network, and may alternatively be referred to as a new radio NodeB (new radio nodeB, gNB) in a future evolved system. Further, the terminal may be a terminal 200 shown in FIG. 2, and is configured to perform method steps related to the terminal in the embodiments of this application. As shown in FIG. 2, the terminal 200 includes a processing unit 210 and a transceiver unit 220. The base station may be a base station 300 shown in FIG. 3, and is configured to perform method steps related to the base station in the embodiments of this application. As shown in FIG. 3, the base station 300 includes a processing unit 310 and a transceiver unit 320. It should be noted that all the operations performed by the processing unit 210 and the transceiver unit 220 can be considered as operations of the terminal 200, and that all the operations performed by the processing unit 310 and the transceiver unit 320 can be considered as operations of the base station 300. The processing unit 310 of the base station 300 may be implemented by a processor of the base station 300, and the transceiver unit 320 may be implemented by a transceiver of the base station 300. The processing unit 210 of the terminal 200 may be implemented by a processor of the terminal 200, and the transceiver unit 220 may be implemented by a transceiver of the terminal 200.

The following describes several terms in this application.

In this application, a first device is a data receive end, and a second device is a data transmit end. In an implementation, the first device may be a terminal, and the second device may be a base station. In other words, the terminal receives data sent by the base station in a downlink, and provides the base station with feedback indicating whether the data is successfully received. In this case, the feedback may be carried in a physical uplink control channel (physical uplink control channel, PUCCH) (which is referred as an NR-PUCCH in NR). Certainly, in another implementation, the first device may be a base station, and the second device may be a terminal. In other words, the base station receives data sent by the terminal in an uplink, and provides the terminal with feedback indicating whether the data is successfully received. In this case, the feedback may be carried in a physical downlink control channel (physical downlink control channel, PDCCH).

Feedback information in this application is feedback information that can indicate whether the first device has successfully received the data sent by the second device. For example, in an LTE system, the feedback information may be HARQ feedback, and each bit may correspond to one ACK or one NACK. Certainly, this application is not limited to the foregoing possibilities. For another example, the feedback information may specifically further indicate a volume of data that needs to be retransmitted, or the feedback information may further indicate decoding quality information (decoder state information, DSI). For example, the DSI may indicate three different types of information content: ACK, NACK but almost correct receiving, or NACK with poor decoding effect during receiving. The three different types of information content may be respectively indicated by using different bit values.

**Embodiment 1**

A first device receives data sent by a second device, and needs to send, to the second device according to a HARQ mechanism, feedback information indicating whether the data is successfully received.

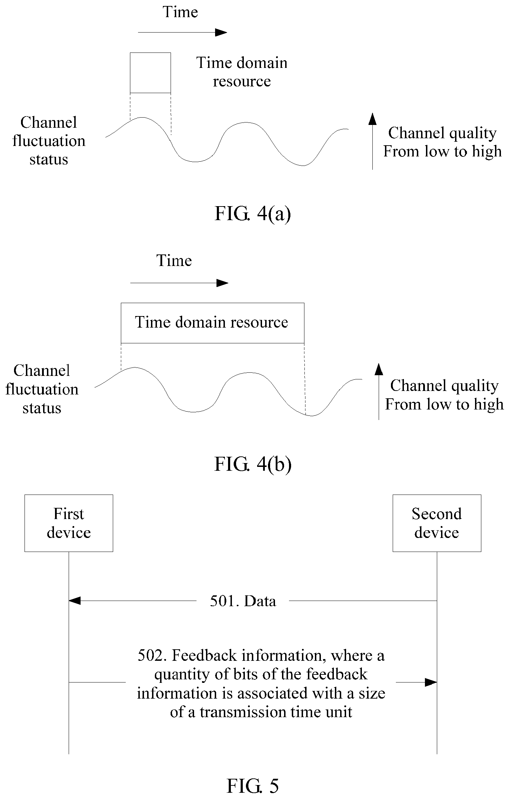

The HARQ mechanism is intended to ensure data transmission reliability. A longer time domain resource corresponding to data transmission indicates greater impact of channel quality fluctuation on the data transmission, and as a result, uncertainty about whether the data transmission is correct rises. As shown in FIG. 4(a), data transmission corresponds to a relatively short time domain resource. In this case, impact of a channel on data is basically consistent within a range of the time domain resource. Either all the data undergoes major impact, that is, channel quality is poor; and as a result, all the data is erroneously transmitted; or all the data undergoes minor impact, that is, channel quality is good; and all the data is correctly transmitted. In this case, to reduce resource overheads, 1 bit may be used to feed back whether the data is successfully received. In other words, the feedback information uses 1 bit. However, as shown in FIG. 4(b), data transmission corresponds to a relatively long time domain resource. In this case, impact of a channel on data may fluctuate violently within a range of the time domain resource. Sometimes major impact is exerted, that is, channel quality is poor; and as a result, all the data is erroneously transmitted. Sometimes minor impact is exerted, that is, channel quality is good; and all the data is correctly transmitted. In this case, it is more appropriate to use a plurality of bits to feed back whether different parts of the data are successfully received. In this way, the second device that serves as a data sending party needs to retransmit only a part of the data that fails to be received.

It can be learned from the above that the quantity of bits of the feedback information is related to the time domain resource occupied by the data. However, in a communications system, both scheduling and transmission of data are based on a transmission time unit in the communications system. The transmission time unit may also be referred to as a minimum scheduling unit. For example, the transmission time unit may be a transmission time interval (transmission time interval, TTI) in an LTE system; or in an NR/5G system, the transmission time unit may be a slot, a time domain symbol, or a mini slot (mini slot) including one or more time domain symbols, or integrates a plurality of slots or mini slots. The time domain symbol may be an orthogonal frequency division multiplexing (orthogonal frequency division multiplexing, OFDM) symbol, or may be a single carrier frequency division multiple access (single carrier frequency division multiple access, SC-FDMA) symbol.

The quantity of bits of the feedback information may be associated with a size of the transmission time unit.

For example, as shown in FIG. 5, a feedback method provided in this application includes the following steps:

501. The first device receives the data sent by the second device.

502. The first device sends, to the second device, the feedback information indicating whether the data is successfully received, where the quantity of bits of the feedback information is associated with the size of the transmission time unit in the communications system.

Specifically, a first condition may be set, and the quantity of bits of the feedback information is determined based on whether the transmission time unit meets the first condition.

In an implementation, a threshold may be set for the size of the transmission time unit. If the size of the transmission time unit is greater than or equal to the threshold, the first condition is met, and the feedback is performed by using a plurality of bits. In other words, the feedback information uses a plurality of bits. If the size of the transmission time unit is less than the threshold, the first condition is not met, and the feedback is performed by using 1 bit. In other words, the feedback information uses 1 bit.

Alternatively, if the size of the transmission time unit is greater than the threshold, the first condition is met, and the feedback is performed by using a plurality of bits. If the size of the transmission time unit is less than or equal to the threshold, the first condition is not met, and the feedback is performed by using 1 bit.

The size of the transmission time unit may be determined by a subcarrier spacing and a quantity of symbols in a slot. For example, in the LTE system, the subcarrier spacing is 15 kilohertz (KHZ), the quantity of symbols in a slot is 14, and an obtained TTI is correspondingly 1 millisecond (ms).

In another communications system, there may be a plurality of sizes of transmission time units, for example, 1 ms same as that in the LTE system, or a sub transmission time unit of 0.125 ms. In this case, a carrier spacing is 60 kHz and the quantity of symbols in a slot is 7. In addition, the data may alternatively be transmitted in a slot aggregation manner. In other words, a plurality of transmission time units may be scheduled to transmit the data. In this way, a length of the time domain resource occupied by the data is extended.

The threshold may be determined by the second device based on an actual situation and notified to the first device dynamically, or may be determined by the first device based on an actual situation. Alternatively, the threshold may be agreed upon in advance between the first device and the second device.

Alternatively, a specific numerical value may be set. When the size of the transmission time unit is equal to the specific numerical value, the first condition is met, and a quantity of feedback bits corresponding to the numerical value is the quantity of bits of the feedback information, for example, as shown in Table 1 to Table 3 below:

**Table 1**

| Length of the transmission time unit (ms) | Quantity of feedback bits |
|---|---|
| 0.125 | 1, or comprehensively considered according to another embodiment (for example, a subband) |
| 0.25 | A plurality of bits, or comprehensively considered according to another embodiment |
| 0.5 | A plurality of bits, or comprehensively considered according to another embodiment |
| 1 | A plurality of bits, or comprehensively considered according to another embodiment |

**Table 2**

| Length of the transmission time unit (ms) | Quantity of feedback bits |
|---|---|
| 0.125 | 1, or comprehensively considered according to another embodiment (for example, a subband) |
| 0.25 | 1, or comprehensively considered according to another embodiment (for example, a subband) |
| 0.5 | A plurality of bits, or comprehensively considered according to another embodiment |
| 1 | A plurality of bits, or comprehensively considered according to another embodiment |

**Table 3**

| Length of the transmission time unit (ms) | Quantity of feedback bits |
|---|---|
| 0.125 | 1, or comprehensively considered according to another embodiment (for example, a subband) |
| 0.25 | 1, or comprehensively considered according to another embodiment (for example, a subband) |
| 0.5 | 1, or comprehensively considered according to another embodiment (for example, a subband) |
| 1 | A plurality of bits, or comprehensively considered according to another embodiment |

After the quantity of bits of the feedback information is determined, in combination with an actual sending correctness status of the data, for example, when the feedback information uses a plurality of bits, the data may be divided into a plurality of groups. Each group corresponds to 1 bit that indicates whether the group is correctly received. For example, when a value of the bit is "1", the group of data is correctly received; or when a value of the bit is "0", the group of data fails to be received. The first device sends the feedback information to the second device.

It should be noted that in this embodiment, it may be considered that the data received by the first device corresponds to one TB.

**Embodiment 2**

As described in Embodiment 1, the size of the transmission time unit may be determined by the subcarrier spacing and the quantity of time domain symbols in the transmission time unit. Therefore, different from Embodiment 1, in Embodiment 2, a quantity of bits of feedback information may be associated with the subcarrier spacing or associated with the quantity of time domain symbols of the transmission time unit.

When the quantity of bits of the feedback information is associated with the subcarrier spacing, a threshold may be set for the subcarrier spacing. A person skilled in the art may be aware that the subcarrier spacing is inversely proportional to a size of the transmission time unit. If the subcarrier spacing is greater than the threshold, feedback is performed by using 1 bit. In other words, the feedback information uses 1 bit. If the subcarrier spacing is less than or equal to the threshold, feedback is performed by using a plurality of bits. In other words, the feedback information uses a plurality of bits.

Alternatively, if the subcarrier spacing is greater than or equal to the threshold, feedback is performed by using 1 bit; or if the subcarrier spacing is less than the threshold, feedback is performed by using a plurality of bits.

When the quantity of bits of the feedback information is associated with the quantity of time domain symbols in the transmission time unit, a threshold may be set for the quantity of time domain symbols in the transmission time unit. A person skilled in the art may be aware that the quantity of time domain symbols in the transmission time unit is directly proportional to a size of the transmission time unit. If the quantity of time domain symbols in the transmission time unit is less than the threshold, feedback is performed by using 1 bit. In other words, the feedback information uses 1 bit. If the quantity of time domain symbols in the transmission time unit is greater than or equal to the threshold, feedback is performed by using a plurality of bits. In other words, the feedback information uses a plurality of bits.

Alternatively, if the quantity of time domain symbols in the transmission time unit is less than or equal to the threshold, feedback is performed by using 1 bit; or if the quantity of time domain symbols in the transmission time unit is greater than the threshold, feedback is performed by using a plurality of bits.

Optionally, a specific value may be set for the subcarrier spacing, and the specific value corresponds to one quantity of feedback bits. For example, Table 4 and Table 5 show two possible corresponding manners:

**Table 4**

| Subcarrier spacing (kHz) | Quantity of feedback bits |
|---|---|
| 60 | 1, or comprehensively considered according to another embodiment (for example, a subband) |
| 30 | A plurality of bits, or comprehensively considered in combination with another embodiment |

(continued)

| Subcarrier spacing (kHz) | Quantity of feedback bits |
|---|---|
| 15 | A plurality of bits, or comprehensively considered in combination with another embodiment |

**Table 5**

| Subcarrier spacing (kHz) | Quantity of feedback bits |
|---|---|
| 60 | 1, or comprehensively considered according to another embodiment (for example, a subband) |
| 30 | 1, or comprehensively considered according to another embodiment (for example, a subband) |
| 15 | A plurality of bits, or comprehensively considered in combination with another embodiment |

Alternatively, a specific value may be set for a time domain symbol in the transmission time unit. The specific value corresponds to one quantity of feedback bits. For example, Table 5 and Table 6 show two possible corresponding manners:

**Table 6**

| Quantity of time domain symbols of a transmission unit | Quantity of feedback bits |
|---|---|
| 1 | 1, or comprehensively considered according to another embodiment (for example, a subband) |
| 2 | 1, or comprehensively considered according to another embodiment (for example, a subband) |
| 4 | 1, or comprehensively considered according to another embodiment (for example, a subband) |
| 7 | A plurality of bits, or comprehensively considered in combination with another embodiment |
| 14 | A plurality of bits, or comprehensively considered in combination with another embodiment |

**Table 7**

| Quantity of time domain symbols of a transmission unit | Quantity of feedback bits |
|---|---|
| 1 | 1, or comprehensively considered according to another embodiment (for example, a subband) |
| 2 | 1, or comprehensively considered according to another embodiment (for example, a subband) |
| 4 | 1, or comprehensively considered according to another embodiment (for example, a subband) |
| 7 | 1, or comprehensively considered according to another embodiment (for example, a subband) |
| 14 | A plurality of bits, or comprehensively considered in combination with another embodiment |

Alternatively, the quantity of bits of the feedback information may be associated with both the subcarrier spacing and a quantity of symbols in a transmission unit. A threshold 1 and a threshold 2 may be respectively set for the subcarrier spacing and the quantity of symbols in the transmission unit. If the subcarrier spacing is greater than or equal to the threshold 1, and the quantity of symbols in the transmission time unit is less than the threshold 2, the feedback information uses 1 bit; or if the subcarrier spacing is less than the threshold 1, and the quantity of symbols in the transmission time unit is greater than or equal to the threshold 2, the feedback information uses a plurality of bits.

Optionally, specific values may be respectively set for the subcarrier spacing and the quantity of symbols in the transmission unit. The two specific values correspond to one quantity of feedback bits. For example, Table 7, Table 8, and Table 9 show three possible corresponding manners:

**Table 8**

| Subcarrie r spacing (kHz) | Quantity of slot symbols in the transmission time unit | Quantity of feedback bits |
|---|---|---|
| 15 | 14 | A plurality of bits, or comprehensively considered in combination with another embodiment |
| 15 | 7 | A plurality of bits, or comprehensively considered in combination with another embodiment |
| 30 | 14 | A plurality of bits, or comprehensively considered in combination with another embodiment |
| 30 | 7 | A plurality of bits, or comprehensively considered in combination with another embodiment |
| 60 | 14 | A plurality of bits, or comprehensively considered in combination with another embodiment |
| 60 | 7 | 1, or comprehensively considered according to another embodiment (for example, a subband) |

**Table 9**

| Subcarrie r spacing (kHz) | Quantity of slot symbols in the transmission time unit | Quantity of feedback bits |
|---|---|---|
| 15 | 14 | A plurality of bits, or comprehensively considered in combination with another embodiment |
| 15 | 7 | A plurality of bits, or comprehensively considered in combination with another embodiment |
| 30 | 14 | A plurality of bits, or comprehensively considered in combination with another embodiment |
| 30 | 7 | 1, or comprehensively considered according to another embodiment (for example, a subband) |
| 60 | 14 | 1, or comprehensively considered according to another embodiment (for example, a subband) |
| 60 | 7 | 1, or comprehensively considered according to another embodiment (for example, a subband) |

**Table 10**

| Subcarrie r spacing (kHz) | Quantity of slot symbols in the transmission time unit | Quantity of feedback bits |
|---|---|---|
| 15 | 14 | A plurality of bits, or comprehensively considered in combination with another embodiment |

(continued)

| Subcarrie r spacing (kHz) | Quantity of slot symbols in the transmission time unit | Quantity of feedback bits |
|---|---|---|
| 15 | 7 | 1, or comprehensively considered according to another embodiment (for example, a subband) |
| 30 | 14 | 1, or comprehensively considered according to another embodiment (for example, a subband) |
| 30 | 7 | 1, or comprehensively considered according to another embodiment (for example, a subband) |
| 60 | 14 | 1, or comprehensively considered according to another embodiment (for example, a subband) |
| 60 | 7 | 1, or comprehensively considered according to another embodiment (for example, a subband) |

It can be understood that all the foregoing embodiments (Table 1 to Table 10) are merely intended to help a person skilled in the art better understand the technical solutions of the embodiments rather than limit a correspondence. For example, a correspondence may be a subset, an extension, or a modification of the rules in the foregoing tables. For another example, the subcarrier spacing may alternatively be 3.75 kHz, 7.5 kHz, 120 kHz, 240 kHz, 480 kHz, or 960 kHz; the quantity of slot symbols in the transmission time unit may alternatively be 3, 5, 6, 8, 9, 10, 11, 12, 13, 28, or the like; and the size of the transmission time unit also has various corresponding values. A correspondence may be defined or stipulated for the foregoing configurations. Details are not described in this specification. The quantity of bits of the feedback information may use 1 bit (or may be comprehensively considered according to another embodiment, for example, a subband) when at least one of the following conditions is met: the transmission time unit is short enough, the quantity of slot symbols in the transmission time unit is small enough, and the subcarrier spacing is large enough. Otherwise, the quantity of bits of the feedback information may use a plurality of bits, or the quantity of bits of the feedback information is determined by comprehensively considering another embodiment.

For another technical solution of this embodiment, refer to Embodiment 1. Details are not described herein again.

Embodiment 3, not according to the invention and present for illustration purposes only

Different from Embodiment 1 and Embodiment 2, in Embodiment 3, a quantity of bits of feedback information is associated with a time domain Doppler parameter.

As a movement speed of a device increases, it may be considered that channel quality also fluctuates more violently. A magnitude parameter of channel quality fluctuation may be depicted by using a Doppler effect parameter. Channel fluctuation increases as the Doppler effect parameter increases.

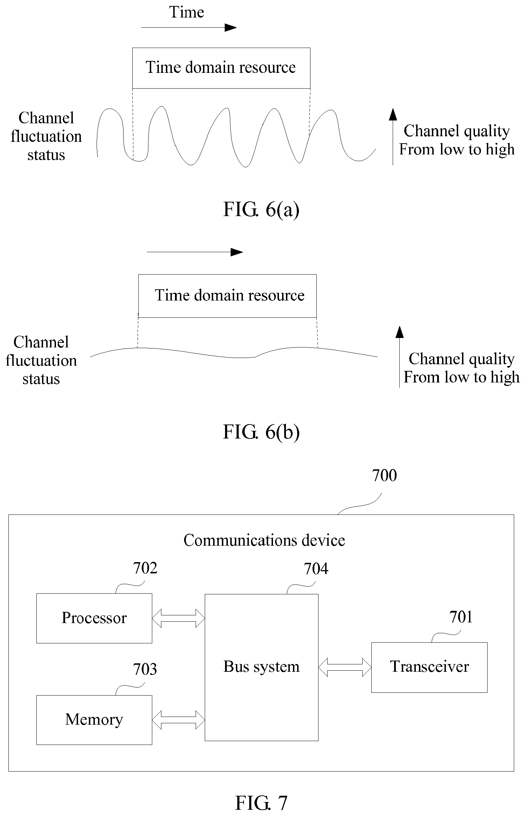

A person skilled in the art knows that impact on a same segment of time domain resource increases as channel quality fluctuation in time domain increases, and as a result, uncertainty about whether data is correctly transmitted rises. For example, as shown in FIG. 6(a), a Doppler effect of a same segment of time domain resource is relatively high. In this case, impact of a channel on data may fluctuate violently within a range of the time domain resource. Sometimes major impact is exerted, that is, channel quality is poor; and as a result, all the data is erroneously transmitted. Sometimes minor impact is exerted, that is, channel quality is good; and all the data is correctly transmitted. In this case, obviously, it is more appropriate to use a plurality of bits to feed back whether different parts of the data are successfully received. As shown in FIG. 6(b), a Doppler effect of a same segment of time domain resource is very low. In this case, impact of a channel is basically consistent within a range of the time domain resource. Either all the data undergoes major impact, that is, channel quality is poor; and as a result, all the data is erroneously transmitted; or all the data undergoes minor impact, that is, channel quality is good; and all the data is correctly transmitted. In this case, to reduce resource overheads, 1 bit may be used to feed back whether the data is successfully received.

For example, when the Doppler parameter reaches 200 Hz, it may be considered that channel fluctuation is relatively violent. Magnitude of a Doppler effect may be reflected in the following two manners:

(1) The magnitude of the Doppler effect is determined based on measurement information, for example, reciprocity measurement, of a first device or a second device. For example, when the first device is a terminal and the second device is a base station, the base station may determine the magnitude of the Doppler effect based on measurement information of the terminal.

(2) Currently, a configurable demodulation reference signal (demodulation reference signal, DMRS) is already introduced into a communications system. When the Doppler effect is high, usually, an additional DMRS (additional DMRS) or a DMRS with a high time domain density is optionally configured, to enhance estimated channel quality. Therefore, the magnitude of the Doppler effect may be determined according to whether the additional DMRS or the DMRS with a high time domain density is semi-statically or dynamically configured in the communications system. If the additional DMRS or the DMRS with a high time domain density is configured, a plurality of bits may be selected for feedback (because it is considered that the Doppler effect is high in this case).

In an implementation, when an additional DMRS or a DMRS with a high time domain density is configured for the first device, a plurality of bits are used for feedback. In other words, the feedback information uses a plurality of bits. Otherwise, if an additional DMRS or a DMRS with a high time domain density is not configured, 1 bit is used for feedback. In other words, the feedback information uses 1 bit.

Another implementation of this embodiment is the same as the implementations in the foregoing embodiments, and is not described herein again. Embodiment 4, not according to the invention and present for illustration purposes only

Different from the foregoing embodiments, in Embodiment 4, a quantity of bits of feedback information is associated with a quantity of subbands for transmitting data or a quantity of carriers for transmitting data.

When a first device receives the data by using a plurality of subbands or a plurality of carriers, a transmission status of the data may vary in the subbands or the carriers according to a quality condition of a frequency domain channel. Therefore, the first device may determine the quantity of bits of the feedback information based on a signal-to-noise ratio (signal noise ratio, SNR) or a channel quality indicator (channel quality indicator, CQI) of each subband or carrier.

In an implementation, the second device may map the data to a plurality of subbands or carriers for sending to the first device. For example, data of one TB is divided into several CBs, and at least one CB is mapped to each subband or each carrier. When the data is scheduled, the second device or the first device may configure a same modulation and coding scheme (modulation and coding scheme, MCS) for all the subbands or all the carriers. In other words, the subbands and the carriers share one MCS field indicator. Alternatively, the second device or the first device may configure different MCSs for the subbands and the carriers. In other words, there are a plurality of MCS field indicators. Alternatively, the second device or the first device may configure different processes for the subbands and the carriers. In the foregoing scenarios, the feedback information may use a plurality of bits. For example, 1 bit is correspondingly configured for each subband or each carrier for feedback.

For another technical solution of this embodiment, refer to the foregoing embodiments. Details are not described herein again. Embodiment 5, not according to the invention and present for illustration purposes only

Different from the foregoing embodiments, in Embodiment 5, feedback information is associated with a codebook size of a control message that carries the feedback information. The codebook size is an upper limit of a quantity of bits that can be carried in the control message and that are of the feedback information indicating whether data is successfully received. For example, in an LTE system, a codebook size corresponding to a UCI format 3 is 20 bits.

Feedback information sent by a first device to a second device needs to be carried in a control message. For example, when the first device is a terminal and the second device is a base station, the control message may be uplink control information (uplink control information, UCI). Therefore, a quantity of bits of the feedback information is limited by a codebook size of the UCI. The codebook size is usually agreed upon in advance.

Considering the following scenario: the first device receives data sent by the second device, in this embodiment, the data includes at least one TB. In other words, the data includes at least one data block. The second device may send the data to the first device in a carrier aggregation manner. For example, when the data includes a plurality of TBs, one or more of the TBs are separately transmitted on a plurality of carriers. Alternatively, the data may be located in different transmission time units. For example, when the data includes a plurality of TBs, one or more of the TBs may be carried in different time units. The first device needs to feed back, in a same piece of UCI, whether the data is successfully received.

It is assumed that without constraint from the codebook size of the control message, feedback on each TB in the data may be performed by using an original quantity of feedback bits. Ni is an original quantity of feedback bits corresponding to an $i^{th}$ transport block in the at least one TB, i is an integer that meets $1 \leq i \leq L$, L is a quantity of TBs included in the data, and the L TBs may be TBs transmitted by using different MIMO layers, different TRPs, different carriers, and/or different transmission time units. Ni is an integer greater than or equal to 1. (For a manner for determining Ni, refer to other embodiments of this application. Details are not repeatedly provided herein in this application.) A sum obtained by adding up original quantities of feedback bits corresponding to all the TBs in the data is $\sum_{1 \leq i \leq L} N_i$ .

In a manner for determining Ni, a quantity of feedback bits of each of the L TBs may be a fixed value. For example, a quantity of feedback bits of the $i^{th}$ TB is M regardless of a TBS of the TB and regardless whether the TB is initially transmitted or retransmitted, where M is a fixed value. (The value M may be configured by a system. In other words, a quantity of feedback bits of each TB on each carrier is M. In addition, a value Mj may be also configured for each carrier. In other words, a quantity of CBGs or a quantity of feedback bits of each TB on a $j^{th}$ carrier is Mj. Mj of different carriers may be different. For example, if CBG transmission or CBG feedback is not enabled on the $j^{th}$ carrier, Mj=1.) This method can prevent a problem that a quantity of feedback bits or a quantity of CBGs of a TB is unknown after a control channel for transmitting the TB is lost. By using this manner, if it is detected that at least one TB is lost (to be specific, discontinuous transmission is performed, or scheduling information of the at least one TB is not detected or is lost), a bit corresponding to the lost TB in the $\sum_{1 \leq i \leq L} N_i$ bits may be set to NACK or discontinuous transmission (discontinuous transmission, DTX). The quantity of feedback bits of each TB is determined. Therefore, a transmit end and a receive end can reach a consensus.

Alternatively, Ni may be determined in other manners. For other manners, refer to other embodiments or other solutions.

Now the codebook size is considered in this embodiment. To be specific, $\sum_{1 \leq i \leq L} N_i$ is compared with the codebook size. If $\sum_{1 \leq i \leq L} N_i$ is greater than the codebook size, it indicates that the control message cannot accommodate the $\sum_{1 \leq i \leq L} N_i$ bits of feedback information. Then, as a compromise, the quantity of feedback bits corresponding to each TB in the data needs to be reduced to or maintained at 1. In other words, in actual feedback information, the quantity of feedback bits corresponding to each TB is 1. If M is greater than the codebook size, it indicates that the control message can accommodate the $\sum_{1 \leq i \leq L} N_i$ bits of feedback information. Then, the feedback on each TB is performed by using the original quantity of feedback bits. In other words, the feedback information uses $\sum_{1 \leq i \leq L} N_i$ bits. Further, if $\sum_{1 \leq i \leq L} N_i$ is still greater than the codebook size after the quantity of feedback bits corresponding to each TB is reduced to 1, optionally, the quantity of bits of the feedback information is determined in a HARQ bundling bundling manner. For example, an and operation is performed on feedback bits corresponding to a plurality of TBs on which multiple in multiple out (multiple in multiple out, MIMO) space division multiplexing is performed, to further reduce the quantity of feedback bits.

The quantity of bits of the feedback information is traded off by considering the codebook size. As many bits as possible are used for feedback while a feedback upper limit of the codebook size is met, to reduce retransmitted information and improve feedback accuracy. When the feedback upper limit of the codebook size is exceeded, reducing to 1 bit for one TB is performed, to reduce the quantity of bits of the feedback information, thereby meeting system requirements and reducing system overheads.

In addition, when the L (L>1) TBs use a same piece of UCI to feed back decoding results (which may also be referred to as a HARQ multiplexing technology (HARQ multiplexing)), optionally, if a plurality of bits are used to feed back on the TBs, the codebook size can be determined by using only a dynamic codebook mechanism (for example, a downlink assignment index (downlink assignment index, DAI) mechanism), and a UCI size cannot be determined by using a semi-static codebook mechanism. This is because feedback using a plurality of bits causes excessive overheads in the semi-static codebook mechanism (in which a quantity of TBs/physical downlink shared channels (physical downlink shared channel, PDSCH) on which feedback is performed is fixed, in other words, feedback needs to be performed even on a PDSCH that is not transmitted in a feedback window). If the TBs use 1 bit for feedback, the dynamic codebook mechanism and the semi-static codebook mechanism can be supported.

For another technical solution of this embodiment, refer to the foregoing embodiments. Details are not described herein again. Embodiment 6, not according to the invention and present for illustration purposes only

Different from Embodiment 6, in Embodiment 6, feedback information is associated with a capacity of a control message. The capacity of the control message is an upper limit of an information volume that can be carried by the control message, and may alternatively be referred to as a payload (payload) of the control message.

In addition to including feedback information indicating whether data is successfully received, the control message may further include other information, for example, a rank indicator, a channel quality indicator, a precoding matrix indicator, beam-related information, a scheduling request, a channel state information-reference signal, a resource indicator, reference signal received power, and reference signal received quality. This is not limited in this application. Not only a quantity of bits of the feedback information but also a quantity of bits carrying the other information are considered for the capacity of the control message. Therefore, a priority may be set for sending or a sending manner of the feedback information and the other information with reference to the capacity of the control message.

In an implementation, in a scenario similar to that in Embodiment 5, it is assumed that without constraint from the capacity of the control message, feedback on each TB in the data may be performed by using an original quantity of feedback bits. Ni is an original quantity of feedback bits corresponding to an $i^{th}$ transport block in the at least one TB, i is an integer that meets $1 \le i \le L$, L is a quantity of TBs included in the data, and the L TBs may be TBs transmitted by using different MIMO layers, different TRPs, different carriers, and/or different transmission time units. Ni is an integer greater than or equal to 1. (For a manner for determining Ni, refer to other embodiments of this application. Details are not repeatedly provided herein in this application.) The other messages in the control message need to occupy K bits in total, where K is a positive integer greater than 1. A sum obtained by adding up original quantities of feedback bits corresponding to all the TBs in the data is $\sum_{1 \le i \le L} N_i$ .

Now the capacity of the control message is considered in this embodiment. A sum $(\sum_{1 \le i \le L} N_i + K)$ of $\sum_{1 \le i \le L} N_i$ and K is compared with the capacity of the control message. If $(\sum_{1 \le i \le L} N_i + K)$ is less than or equal to the capacity of the control message, it indicates that the control message can accommodate the $\sum_{1 \le i \le L} N_i$ bits of feedback information and the K bits of other information. Then, the feedback on each TB is performed by using the original quantity of feedback bits. In other words, the feedback information uses $\sum_{1 \le i \le L} N_i$ bits. If $(\sum_{1 \le i \le L} N_i + K)$ is greater than the capacity of the control message, it indicates that the control message cannot accommodate the bits of feedback information and the K bits of other information. In this case, a quantity of feedback bits corresponding to each TB in the data may be reduced to or maintained at 1. In other words, in actual feedback information, the quantity of feedback bits corresponding to each TB is 1, 1 bit is used for each TB in the data, and a sum value is L.

Then, a sum (L+K) of L and K is compared with the capacity of the control message. If (L+K) is less than or equal to the capacity of the control message, it indicates that, in this case, the control message can accommodate the L bits of feedback information and the K bits of other information. Then, during actual feedback, in the control message, a quantity of feedback bits corresponding to each TB in the feedback information is 1, and the control message also accommodates the K bits of other information that needs to be sent. If (L+K) is less than or equal to the capacity of the control message, it indicates that, in this case, the control message cannot accommodate the L bits of feedback information and the K bits of other information. Then, during actual feedback, in the control message, the quantity of feedback bits corresponding to each TB in the feedback information is 1 bit, and the control message does not include the other information or includes a part of the other information. This may specifically depend on a priority setting in the other information. The current control message includes a part of the other information corresponding to a high priority.

Certainly, in the foregoing implementation, a priority of the feedback information is higher than a sending priority of the other messages. In addition, using an original bit to feed back on each TB has a lower priority than using 1 bit to feed back on the TB. Alternatively, priorities different from those described herein may be designed for this application. For example, the sending priority of the other messages is higher than the priority of the feedback information, using 1 bit to feed back on each TB has a higher priority than using the original bit to feed back on each TB, or another design is applied. Related solutions are similar to the foregoing solutions, and are not described herein.

The quantity of bits of the feedback information is traded off in this way by considering the capacity of the control message. As many bits as possible are used for feedback while an upper limit of the capacity of the control message is met, to reduce retransmitted information and improve feedback accuracy. When the upper limit of the capacity of the control message is exceeded, reducing to 1 bit for one TB is performed, to reduce the quantity of bits of the feedback information, thereby meeting system requirements and reducing system overheads. Further, it may be stipulated that the other information is not sent by using the currently sent control message, to control a quantity of bits of information carried in the control message.

For another technical solution of this embodiment, refer to Embodiment 6 or other embodiments above. Details are not described herein again. Embodiment 7, not according to the invention and present for illustration purposes only

Different from Embodiment 5 or Embodiment 6, in Embodiment 7, feedback information is associated with a location of a control message, that is, a channel that carries the control message.

When a first device is a terminal, and a second device is a base station, the control message may be UCI. With development of communications technologies, physical uplink control channels (physical uplink control channel, PUCCH) may be further categorized into a short PUCCH (short PUCCH) and a long PUCCH (long PUCCH). For example, the short PUCCH may correspond to only one to two symbols in time domain and support transmission of dozens of bits; and the long PUCCH may correspond to two or more symbols in time domain and support transmission of hundreds of bits. The UCI may be carried in a short PUCCH, for example, one or two symbols; or may be carried in a long PUCCH, for example, 14 symbols. Alternatively, the UCI may be carried in a physical uplink shared channel (physical uplink shared channel, PUSCH). The PUSCH is a data channel, and can support transmission of more bits than that of a control channel (for example, the short PUCCH or the long PUCCH). Channel capacities or coverage performance of the short PUCCH, the long PUCCH, and the PUSCH is different. Therefore, in this application, a quantity of bits of the feedback information may be determined at least based on a channel in which the UCI is located. For example, based on a requirement of a scenario (for example, the scenario considered in Embodiment 6) or a current scheduling status, if the UCI is carried in the short PUCCH, in the feedback information, 1 bit is used for each TB; or if the UCI is carried in the long PUCCH or the PUSCH, in the feedback information, a plurality bit may be used for each bit. In other words, a plurality of bits or 1 bit can be used for each TB.

Specifically, the second device (which may be the base station) has configured a current frame format to support only the short PUCCH (for example, a former part of a current slot is a downlink symbol, and only a later part is an uplink symbol). Limited by the capacity and the coverage performance of the short PUCCH, the short PUCCH supports only some UCI formats. These formats support only 1-bit feedback on each TB. In this case, in the feedback information, each TB can use only 1 feedback bit. On the contrary, in some scenarios, the base station configures a current frame format to support the long PUCCH (for example, a current slot is an uplink-only slot, several current contiguous slots are all uplink slots, or a quantity of uplink symbols in a current slot is greater than or equal to 2). Considering that the capacity of the long PUCCH is relatively large and the coverage performance of the long PUCCH is relatively favorable, a UCI format supported by the long PUCCH can support multi-bit feedback for each TB. In this case, in the feedback information, each TB uses a plurality of feedback bits or 1 feedback bit. (For a manner for determining the quantity of bits, refer to other embodiments of this application. Details are not described herein in this application.) Similarly, for example, a currently scheduled slot is for PUSCH transmission, and the UCI is carried in the PUSCH. Considering the capacity and the coverage performance of the PUSCH, the PUSCH can support multi-bit feedback for each TB. In this case, in the feedback information, each TB uses a plurality of feedback bits or 1 feedback bit.

For another technical solution of this embodiment, refer to the foregoing embodiments. Details are not described herein again. Embodiment 8, not according to the invention and present for illustration purposes only

A scenario is in which a plurality of services coexist is considered for a communications system in this embodiment. For example, data of the plurality of services needs to be transmitted at a same time. For another example, the plurality of services include a URLLC service and an eMBB service. In the communications system, data received by a first device may belong to the eMBB service, and may be affected by data transmission related to the URLLC service in a receiving process. Such impact may be unexpected. In other words, receiving of the data is affected in a few symbols in a time-frequency resource that carries the data, resulting in an increase in a probability of receiving errors.

Information related to the impact may be notified to the first device in an explicit or implicit manner.

For example, in the explicit manner, a second device may indicate information about the affected time-frequency resource, for example, a time domain region and/or a frequency domain region of the affected time-frequency resource, to the first device by using indication information. Specifically, the time domain region and/or the frequency domain region may be represented by using at least one of a physical block, a physical block group, a symbol, a symbol group, a mini-slot (mini-slot), a mini-slot group, a CB, a CB group, a TB, slot, and the like. The indication information may be sent in a same transmission time unit for sending the data, or may be sent in a transmission time unit after the transmission time unit for sending the data.

In the explicit manner, alternatively, a second device may indicate, to the first device by using indication information, whether the eMBB service is punctured by the URLLC service. In other words, the impact may be specifically that the eMBB service is punctured by the URLLC service. The indication information may be only 1 bit and indicates whether puncturing by URLLC occurs in a current slot. The indication may be an on-indication (on-indication), that is, on a punctured symbol; or the indication may be a post-indication (post-indication), for example, carried on a trailer symbol for sending current eMBB data, carried in a next slot of a slot for sending the current eMBB data, carried in a next scheduled slot of a current process or another process, or carried in a public control region or control information (for example, downlink control information).

For another example, in the implicit manner, the second device may indicate to the first device by changing a CRC of the sent data. Specifically, if the data is affected, a CRC of a CB or a TB is changed. In other words, a CRC different from a CRC used when the data is not affected is used. The first device can learn, by detecting the CRC, that the data transmission is affected, provided that the first device and the second device have agreed in advance that a change of the CRC means that the data transmission is affected.

In addition, the data being affected described above may be that the data (that is, eMBB data) is punctured by URLLC data, and may alternatively be that the time-frequency resource that carries the data is set to zero power in some regions or is preempted in some regions so that the data cannot be sent, interference indication information exists in some regions, the data is sent by overlapping with other data in some regions, or the like.

This embodiment is different from the foregoing embodiments in the following aspects: The data specifically includes at least one CB, and feedback information is associated with whether some data corresponding to the at least one CB is affected. Some data corresponding to the at least one CB may be a part of a data stream of the at least one CB. When the at least one CB is a plurality of CBs, some data corresponding to the at least one CB may be a data stream of one or several CBs in the plurality of CBs.

If the first device learns, by using the implicit or explicit manner, that the receiving of the data is affected, in an implementation, a quantity of bits of the feedback information may be determined as a plurality of bits. Further, if there are a plurality of CBs, in the feedback information, at least one bit is correspondingly used to feed back on an unaffected part of the data. In other words, at least one bit is used to indicate whether an unaffected CB in the plurality of CBs is successfully received. At least one other bit is correspondingly used to feed back on an affected part of the data. In other words, at least one bit is used to indicate whether an affected CB in the plurality of CBs is successfully received.

Optionally, further, the feedback information may alternatively be associated with a bit rate of the data. For example, on a premise that the data is affected, if the bit rate of the data is relatively high (or an MCS is relatively large), in the feedback information, at least one bit is correspondingly used to feed back on the unaffected data part. In other words, at least one bit is used to indicate whether the unaffected CB in the plurality of CBs is successfully received. However, feedback is not performed on the affected part of the data. In this case, the bit rate is high, and as a result, an affected part of the data certainly fails to be received. Therefore, no extra feedback is required. Optionally, in this case, the second device may immediately supplementarily transmit or retransmit the affected part of the data before the first device performs feedback.

If the bit rate of the data is relatively low (or an MCS is relatively small), in the feedback information, at least one bit is correspondingly used to feed back on the unaffected part of the data. In other words, at least one bit is used to indicate whether the unaffected CB in the plurality of CBs is successfully received. At least one other bit is used to correspond to the affected part of the data. In other words, at least one bit is used to indicate whether the affected CB in the plurality of CBs is successfully received. In this case, the bit rate is relatively low, and there is still a possibility that the affected part of the data is successfully received. Therefore, the first device needs to specifically determine whether the affected part of the data is successfully received and perform feedback. Feedback overheads can be reduced by using this manner.

Whether the bit rate is high or low may be determined through comparison with a threshold. When the bit rate is greater than or equal to the threshold, the first device may consider that the bit rate is relatively high. When the bit rate is less than the threshold, the first device may consider that the bit rate is relatively low. In this way, the first device may apply the foregoing solution based on a result of the comparison.

Optionally, further, the quantity of bits of the feedback information may alternatively be determined based on whether the second device has supplementarily transmitted or retransmitted the affected part of the data before the feedback information is sent.

For example, the second device has supplementarily transmit or retransmitted the affected CB of the data before the feedback is performed. Then, the feedback information needs to use only 1 bit in total. On the contrary, if a base station does not supplementarily transmit or retransmit the affected CB of the data before the feedback is performed, at least one bit is correspondingly used to feed back on the unaffected CB of the data, and at least one other bit is used to correspond to the affected CB of the data. Feedback overheads can be reduced by using this manner.

In addition, if the data includes one CB, when the one CB is affected, a plurality of bits may be used for feedback. For example, a plurality of bits are used to indicate quality of receiving the CB by the first device. The quality is related to a severity of the impact on the CB, and the second device may determine a volume of to-be-retransmitted data based on the quality.

In another implementation, the following describes a communication process of data transmission, receiving, and feedback by using puncturing on and retransmission of a CB group (CB group, CBG) as an example.

It is assumed that one TB includes four CBGs, a third CBG of the TB is punctured by the URLLC service, and a first CBG fails to be sent due to channel fading. Therefore, the first CBG and the third CBG fail to be received by the first device. It is then assumed that in the feedback information, a feedback value "1" corresponds to an ACK, a feedback value "0" corresponds to a NACK, and a new data indicator (new data indicator, NDI) equal to 0 means that current transmission is initial data transmission. All these assumptions are intended for convenient description and may be adjusted in an actual system.

Policy 1: After the first device receives the data, content of the feedback information may be 0101 (which represents that first CBG and the third CBG fail to be received, and a second CBG and a fourth CBG are successfully received.) After receiving the feedback information, the second device may add an index or a sequence number indicator of a currently retransmitted CBG to retransmission downlink control information (downlink control information, DCI). For example, 1010 represents that the first CBG and the third CBG are retransmitted, and NDI=1 means that current transmission is data retransmission. After receiving the retransmission DCI and the retransmitted data, the first device processes the data, for example, performs HARQ combination with previously transmitted data; and performs feedback again based on a processing result.

Policy 2: After the data is affected by the URLLC service in a data sending process, the second device sends a few puncturing indicators (for example, by using 1 bit), to indicate to a receive end whether puncturing by the URLLC service exists. The first device determines a quantity of feedback bits based on whether a puncturing indicator is received. For example, if an indicator that indicates that puncturing exists is received, a plurality of bits are used for feedback. That is, 0101 is fed back (representing that NACKs are fed back on the first CBG and the third CBG). After receiving the feedback information, the second device may add an index or a sequence number indicator of a currently retransmitted CBG to retransmission DCI. For example, 1010 represents that the first CBG and the third CBG are retransmitted, and NDI=1 means that current transmission is data retransmission. After receiving the retransmission DCI and the retransmitted data, the first device processes the data, for example, combines the data with the previously transmitted data or erases previously affected buffered data; and performs new feedback based on a processing result.

Policy 3: After the data is affected by the URLLC service in a data sending process, the second device sends a few puncturing indicators (for example, by using 1 bit), to indicate to a receive end whether puncturing by the URLLC service exists. The first device determines a quantity of feedback bits based on whether a puncturing indicator is received. If an indicator that indicates that puncturing exists is received, a plurality of bits are used for feedback. That is, 0101 is fed back (representing that NACKs are fed back on the first CBG and the third CBG). After receiving the feedback information, the second device adds an index or a sequence number indicator of a currently retransmitted CBG to retransmission DCI. For example, 1010 represents that the first CBG and the third CBG are retransmitted. In addition, the retransmission DCI may include a plurality of retransmission type indicators (regular retransmission or special retransmission, for example, regular retransmission is correspondingly "1", and special retransmission is correspondingly "0"). Each retransmission type indicator corresponds to one CBG. For example, 1101 represents that the third CBG is in special retransmission, for example, retransmission caused by impact of URLLC puncturing; and that the first CBG is in regular retransmission. After receiving the retransmission DCI and the retransmitted data, the second device processes the data, for example, performs HARQ combination on the initially transmitted data for the first CBG and erases the previously affected buffered data for the third CBG; and provides new feedback based on a processing result. Certainly, in addition to the retransmission type indicators, some other independent fields, for example, a plurality of redundancy releases (redundancy release, RV) may be introduced into each CBG. Alternatively, only one retransmission type indicator (regular retransmission or special retransmission) is required. In this case, a plurality of times of retransmission may be needed. For example, a CBG that needs special retransmission is transmitted alone. If the CBG is still not received successfully by the first device after the special retransmission, the CBG or the entire TB is then scheduled by using regular retransmission.

In addition, considering the impact of the URLLC service on the data transmission of the eMBB service, indication information indicating whether HARQ combination is performed may also be added to the downlink control information. For example, if transmission of previously scheduled data is affected by preemption by the URLLC service, it may be indicated that HARQ combination is not performed between some or all of currently transmitted CBGs and previous data, to improve a decoding success rate.

To prevent increasing extra overheads, the first device may be notified, by using a predetermined rule or in an implicit manner, of whether to clear a cache in a buffer of the first device or whether to perform HARQ combination. For example, in LTE, a reversal of content of the NDI relative to content in previous transmission represents initial transmission, and a non-reversal represents retransmission. Then, in this embodiment, a non-reversal of the NDI represents retransmission, and HARQ combination with previously received data may be performed. A reversal of NDI and RV=0 in the DCI represent initial transmission. A reversal of NDI and the RV being a none-zero value represent retransmission, and HARQ combination is not performed between some or all of currently transmitted CBG data and previously data.

It should be noted that the HARQ combination in this embodiment means that currently received data and previously transmitted data in the buffer are combined for decoding.

For another technical solution of this embodiment, refer to the foregoing embodiments. Details are not described herein again.

**Embodiment 9**

Different from the foregoing embodiments, in Embodiment 9, feedback information is associated with a size, that is, a TBS, of data.

As described above, the data may correspond to a TB, and the TB is further divided into a plurality of CBs for transmission. When the entire TB still needs to be retransmitted in a scenario in which only a few CBs fail to be received, low communication efficiency may be caused. Therefore, a quantity of bits of the feedback information may be determined based on the TBS.

During transmission of the data, all corresponding control information is stored in an MCS field, and is used to indicate a currently scheduled modulation scheme used to transmit the data and the TBS of the data. In an implementation, it is determined, based on the TBS, that a quantity of CBs is M, where M is a positive integer greater than or equal to 1. The quantity N of bits of the feedback information is determined based on M, where N is a positive integer greater than or equal to 1. For example, if M is less than a threshold 1, it is determined that a value of N is 1. Otherwise, if M is less than a threshold 2, it is determined that a value of N is 2. Otherwise, if M is less than a threshold 3, it is determined that a value of N is 3; and so on, until M is greater than or equal to all the foregoing thresholds, and it is determined that N is a maximum quantity of feedback bits of a communications system. Threshold 1 < Threshold 2 < Threshold 3, and so on. A quantity of thresholds may be determined based on an actual situation, provided that there is at least one threshold.

The thresholds may be determined based on a compromise between performance and overheads, and the thresholds are usually agreed upon in advance between a first device and a second device.

For a TB having only one CB, the feedback information needs to be only 1 bit. For a TB having a relatively large quantity N of CBs, the feedback information may be the maximum quantity of feedback bits supported by the communications system.

In another implementation, the quantity of bits of the feedback information may be determined based on a quantity of CBGs. Each bit corresponds to feedback on one CBG. A specific possible CB grouping method may be as follows:

It is agreed upon in advance that a size of each CBG, that is, a quantity of CBs, is N1, where N1 is an integer greater than or equal to 1. Quantities of CBs of the CBGs may be the same or different. The quantity of CBGs is obtained based on a total quantity M of CBs obtained by dividing a TB, where M is integer greater than 1. For example, a CBG size N1 is equal to 2, the total quantity M of CBs in the TB is equal to 6. Then, an obtained quantity of CBGs is 3, each CBG includes two CBs in sequence (CBs in a first CBG are CBs numbered {1, 2} in the TB, CBs in a second CBG are CBs numbered {3, 4} in the TB, and CBs in a third CBG are CBs numbered {5, 6} in the TB). For another example, a CBG size N1 is equal to 2, the total quantity M of CBs in the TB is equal to 1 and is less than N1. Then, an obtained quantity of CBGs is 1, and the CBG includes only one CB. For example, it is agreed in advance that if M cannot be divided exactly by N1, there is one or more CBGs in which a quantity of CBs is less than N1. For example, a CBG size N1 is equal to 4, the total quantity M of CBs in the TB is equal to 7. Then, an obtained quantity of CBGs is 2. A first CBG includes first four CBGs, and a second CBG includes last three CBGs (or the first CBG includes first three CBGs, and the second CBG includes last four CBGs). Optionally, a maximum quantity N2 of CBGs supported may be introduced through agreement, where N2 is an integer greater than or equal to 1. When the quantity of CBGs exceeds N2, the size of each CBG needs to be adjusted.

Alternatively, the quantity of CBGs or the maximum quantity N2 of CBGs supported is agreed upon in advance. The quantity of CBGs and the quantity of CBs included in each CBG are obtained based on the total quantity M of CBs in the TB. For example, the maximum quantity N2 of CBGs supported is equal to 4. When the total quantity M of CBs is 3, there are three CBGs, and each CBG has one CB. When the total quantity M of CBs is 7, the quantity of CBGs is 4, and CBs in the four CBGs are CBs in the TB that are numbered {1, 2}, {3, 4}, {5, 6}, and {7} or numbered {1}, {2, 3}, {4, 5}, and {6, 7}. When the total quantity M of CBs is 12, the quantity of CBGs is 4, and CBs in the four CBGs are CBs in the TB that are numbered {1, 2, 3}, {4, 5, 6}, {7, 8, 9}, and {10, 11, 12}. Optionally, a minimum quantity N3 of CBs in a CBG may further be introduced through agreement, where N3 is an integer greater than or equal to 1, and N3<N2. For example, the minimum quantity N3 of CBs in a CBG is equal to 2, and the maximum quantity N2 of CBGs supported is equal to 4. When the total quantity M of CBs is 3, there are two CBGs, and CBs in the two CBGs are CBs in the TB that are numbered {1, 2} and {3} or numbered {1} and {2, 3}.

Alternatively, the quantity of CBGs or the maximum quantity N2 of CBGs supported is agreed upon in advance, and a CBG size (for example, a quantity of bits of a CBG) is obtained based on the TBS. Whether each CBG is further divided into more CBs depends on the CBG size (for example, when the quantity of bits of a CBG (which may or may not include a CRC) is greater than a maximum value, for example, 6144 bits or 8192 bits, further division is performed like an operation in an LTE system). For example, the maximum quantity N2 of CBGs supported is equal to 4. When the TBS (which may or may not include a CRC) is 40000 bits, there are four CBGs, and each CBG is 10000 bits. Because 10000 bits (which may or may not include a CRC) is greater than the maximum value of 6144 bits, each CBG needs to be further divided into two CBs. Optionally, a minimum quantity of bits of a CBG may be introduced through agreement in advance. For example, the minimum quantity of bits of a CBG is 10000 bits, and the maximum quantity N2 of CBGs supported is equal to 4. When the TBS is 20000, if a TB is divided into four CBGs, each CBG includes 500 bits and is less than the minimum quantity of bits. Then, the TB is actually divided into two CBGs, and each CBG is 10000 bits. Because 10000 bits (which may or may not include a CRC) is greater than the maximum value of 6144 bits, each CBG needs to be further divided into two CBs.

Alternatively, a physical CB grouping method may be used. Manner 1: One or more symbols in time domain constitute one group. For example, there are 12 data symbols (without considering a symbol that carries only control) in one slot. Then, every two symbols constitute one group. In other words, there are six groups. Manner 2: One or more RBs, subbands, or carriers in frequency domain constitute one group.

For another technical solution of this embodiment, refer to the foregoing embodiments. Details are not described herein again. Embodiment 10, not according to the invention and present for illustration purposes only

In this embodiment, information associated with a quantity of bits of the feedback information is different from that in the foregoing embodiments. Other parts are the same, and details are not described herein again.

Different scenarios are separately considered in this embodiment.

In a scenario with unexpected interference, the feedback information may use a plurality of bits. For example, a first device is a terminal, and a second device is a base station. The first device may learn, based on a channel measurement result that burst interference exists. Then, the feedback information may use a plurality of bits.

In an inter-station or multi-antenna coordination scenario, the feedback information may use a plurality of bits.

In an implementation, when the first device is the terminal, and the second device is the base station, the quantity of bits of the feedback information may be determined at least based on coordination signaling from the second device received by the first device. For example, it is indicated that a plurality of base stations all serve one or more terminals. The feedback information may use a plurality of bits because issues such as measurement may occur during coordination. For a specific determining manner, refer to one or more of the other embodiments of this application. After the coordination is finished, the quantity of bits of the feedback information may be returned to 1. Optionally, the coordination may be non-interference coordination. When interference coordination exists, the feedback information may be 1 bit because in this case, there is no interference after the interference coordination. When there is no coordination, the feedback information may be a plurality of bits.

In a beam beam scenario, in an implementation, during beam mode switchover, where the mode switchover may include the following: the first device switches from a digital mode to an analog mode, or switches from the analog mode to the digital mode, the feedback information may use 1 bit during switchover from the digital mode to the analog mode, or the feedback information may use a plurality of bits during switchover from the analog mode to the digital mode. In another implementation, in a specific mode, the feedback information may use a plurality of bits. For example, the specific mode is the digital mode. In this case, directions of a beam are relatively dispersed. Therefore, feedback needs to be performed separately by using different bits to indicate whether data is correctly received in the directions.

In the foregoing scenarios, the quantity of bits of the feedback information needs to be a plural number when channel quality is relatively poor or fluctuates relatively violently.

For another technical solution of this embodiment, refer to the foregoing embodiments. Details are not described herein again. Embodiment 11, not according to the invention and present for illustration purposes only

In should be noted that each of the foregoing embodiments describes only a relationship between a factor pointed out in each embodiment and a quantity of bits of feedback information. The factors may include a size of a transmission time unit, a subcarrier spacing, a slot symbol of the transmission time unit, a time domain Doppler parameter, DMRS configuration, a quantity of subbands for transmitting data or a quantity of carriers for transmitting data, whether unexpected interference, coordination, or mode switchover exists, a codebook size of a control message, a capacity of the control message, a location of the control message, indication information indicating that data receiving is affected in a scenario in which a plurality of services coexist, a bit rate of the data, whether supplementary transmission or retransmission is performed before the feedback information is sent, a TBS, and the like. However, in this embodiment, a plurality of factors in all the foregoing embodiments may be considered comprehensively, to determine the quantity of bits of the feedback information. In other words, two or more of the foregoing embodiments may be combined.

For example, the following solution may be obtained by combining Embodiment 1 and Embodiment 3:
If the size of the transmission time unit is less than a threshold, a size of the feedback information is 1 bit. (Optionally, a plurality of bits may be considered in combination with subband configuration.) If the size of the transmission time unit is greater than or equal to the threshold, further, a first device may determine the quantity of bits of the feedback information in combination with the time domain Doppler parameter. For example, if an additional DMRS is configured for the first device, the feedback information uses a plurality of bits. Otherwise, the feedback information may still use 1 bit. For other solutions, refer to the foregoing embodiments.

For another example, the following solution may be obtained by combining Embodiment 1 and Embodiment 4:
If the size of the transmission time unit is less than a threshold, a size of the feedback information is 1 bit. If the size of the transmission time unit is greater than or equal to the threshold, further, a first device may determine the quantity of bits of the feedback information in combination with the quantity of subbands for transmitting the data or the quantity of carriers for transmitting the data. For example, if a plurality of subbands or a plurality of carriers are used for transmitting the data, the feedback information uses a plurality of bits. Otherwise, the feedback information may still use 1 bit. For other solutions, refer to the foregoing embodiments.

Implementations of other combinations may be obtained similarly and can be learned by a person skilled in the art. Therefore, details are not described herein.

The quantity of bits of the feedback information is determined by combining a plurality of the foregoing embodiments and comprehensively considering factors corresponding to each scenario, condition, or the like. This is favorable to improving system performance and communication efficiency.

For another technical solution of this embodiment, refer to the foregoing embodiments. Details are not described herein again. Embodiment 12, not according to the invention and present for illustration purposes only

In the manners for determining a quantity of bits of feedback information in the foregoing embodiments, the quantity of bits of the feedback information may be determined by a data receiving party, a first device, based on an advance agreement. Alternatively, the quantity of bits of the feedback information may be indicated by a data sending party to the data receiving party in a semi-static manner or a dynamic manner. The data sending party may be a second device, for example, a base station, and the data receiving party may be the first device, for example, a terminal.

In an implementation, the second device indicates to the first device by using higher layer signaling, for example, radio resource control (radio resource control, RRC) signaling. In addition, before receiving a new indication, the first device always determines the quantity of bits of the feedback information based on the indication in each data scheduling process. Alternatively, the higher layer signaling notifies whether a multi-bit feedback mode is enabled. If the multi-bit feedback mode is not enabled, 1-bit feedback is always used for one TB in each data scheduling process. If the multi-bit feedback mode is enabled, a quantity of bits of feedback information for each TB may be determined according to one or more manners in the foregoing embodiments or manners other than those in the present invention.

In another implementation, the second device indicates to the first device by using physical layer signaling, for example, downlink control information, for example, by adding a new indication field to the downlink control information. In this case, the indication may vary in each data scheduling.

For another technical solution of this embodiment, refer to the foregoing embodiments. Details are not described herein again. Embodiment 13, not according to the invention and present for illustration purposes only

When a first device is configured to perform multi-bit feedback (which may also be referred to as CBG-level feedback) for data sent by a second device or after CBG-level transmission, for example, when the first device is a terminal and the second device is a base station, the second device may add indication information to DCI to be sent to the first device, where the indication information is used to indicate a currently transmitted CBG or currently transmitted CBGs of a TB. The transmission may be initial transmission or retransmission. The data may include at least one CBG.

For initial transmission of the data, the indication information may further indicate a quantity of groups into which the data is divided.

In this embodiment, a state or a value in the indication information is used to instruct the first device to return to 1-bit feedback mechanism and/or TB-level transmission. For example, a special case exists. To be specific, the indication information indicates that no code block group needs to be transmitted. Such a state is meaningless. In other words, the first device does not need to be additionally indicated in this case, and this case does not occur in actual communication. Therefore, a new meaning may be stipulated for the indication information when no CBG needs to be transmitted, and is indicated to the first device. It is considered that after the multi-bit feedback is configured, the base station may decide to return to a 1-bit feedback mechanism based on an implementation status of a communications system, for example, poor uplink channel quality or erroneous UCI feedback in a specific period of time, or based on another requirement. In this case, when the indication information indicates that no CBG needs to be transmitted, the indication information may be re-stipulated to indicate that the first device returns to the 1-bit feedback mechanism (which may also be referred to TB-level feedback) at least in a current scheduling period. In this way, flexible switchover from the multi-bit feedback to the 1-bit feedback is implemented without adding extra overheads. Optionally, when the indication information is received, it also represents that currently the entire TB (namely, all the code block groups) is transmitted. In other words, the new meaning is that the entire TB (all the CBGs) is scheduled for transmission currently, and the first device performs feedback by using 1 bit.

In an implementation, the indication information may be embodied in a form of a bitmap (bitmap), may be embodied in a form of reusing an existing indication field in downlink control information, may be embodied in a form of encoding jointly with an existing indication field, or the like.

The following provides description by using an example in which the indication information is embodied in the form of a bitmap.

If a maximum quantity of feedback bits configured or supported by the communications system or a maximum quantity of CBGs in single scheduling and transmission is N, the indication information may also occupy N bits. It is assumed that a value "1" of each bit in the indication information represents that a corresponding CBG is transmitted, and a value "0" of each bit represents that a corresponding CBG is not transmitted. (The foregoing is merely an example. Alternatively, a value "1" of each bit in the indication information represents that a corresponding CBG is not transmitted, and a value "0" of each bit represents that a corresponding CBG is transmitted. Alternatively, a reversal of the value of each bit in the indication information relative to a value of the corresponding bit in previously sent indication information represents that transmission is performed, and a non-reversal represents that transmission is not performed. Alternatively, a reversal of the value of each bit in the indication information relative to a value of the corresponding bit in previously sent indication information represents that transmission is not performed, and a non-reversal represents that transmission is performed; or the like. This is not limited in this application.)

Specifically, if N=4, 0110 represents a second CBG and a third CBG included in the data are scheduled for transmission, and "1111" may represent that all the four code block groups included in the data are transmitted, and multi-bit feedback is used. In addition, the first device is also indicated that the currently transmitted data is divided into four groups, and 4 bits may be used for feedback.

When a value of the indication information is "0000", it represents that no CBG needs to be transmitted. In other words, no data needs to be transmitted currently. In this embodiment, based on the foregoing concept, if the indication information is "0000", a new indication meaning is stipulated for the indication information. The new meaning is agreed upon between the first device and the second device, and represents that the first device needs to feed back on the sent data by using 1 bit, in other words, return to the 1-bit feedback mechanism

The foregoing technical solutions may be summarized as follows: The first device receives control information sent by the second device, where the control information includes the indication information, the indication information is used to indicate a sending status of each CBG included in the transport block TB when CBG-level feedback is used, and a quantity of CBGs is greater than or equal to 1.

When the indication information indicates that the sending status is a first state, the first device receives the TB sent by the second device, and feeds back, by using 1 bit, whether the TB is successfully received.

Optionally, the first state is that no CBG is sent. For example, in the first state, an indication information field is 0 only.

The following provides some descriptions of the TB-level feedback and the CBG-level feedback in this embodiment. The TB-level feedback (or TB-level HARQ feedback) is 1-bit feedback. If the TB is decoded successfully (in other words, CRCs of all the CBs are verified, and a CRC of the TB is also verified), an ACK is fed back; otherwise, a NACK is fed back. The CBG-level feedback (or CBG-level HARQ feedback) is to feed back a HARQ-ACK and a decoding result for a CBG. If a CBG is decoded successfully (CRCs of all CBs in the CBG are verified, and if a CRC is added to the CBG, the CRC of the CBG also needs to be verified), an ACK is fed back; otherwise, a NACK is fed back.

It should be noted that this embodiment may be combined with any of the foregoing embodiments or may serve as an independent embodiment. This is not limited in this application.

In all the foregoing embodiments of this application, when different feedback manners, that is, the multi-bit feedback or the 1-bit feedback, are used, in an implementation, the feedback manners may respectively correspond to different resources, where feedback may be performed on different resources, or correspond to different UCI formats (UCI format). For example, when the multi-bit feedback is used, a first UCI format may be used; or when the 1-bit feedback is used, a second UCI format may be used. When the multi-bit feedback is used, a corresponding resource may be a first resource; or when the 1-bit feedback is used, a corresponding resource may be a second resource. The foregoing correspondence between a feedback manner, a resource, and a UCI format may be preconfigured by the base station, or may be determined based on the downlink control information and/or the higher layer signaling. In addition, a manner for determining the first resource and the second resource may be any of the following: (1) implicitly determining by using a control channel element (control channel element, CCE) index in the DCI; (2) determining by using both the higher layer signaling (for example, the RRC signaling) and the DCI, for example, configuring a resource set by using the higher layer signaling, where the downlink control information indicates at least one resource in the set; (3) determining based on indication of the DCI. Embodiment 14, not according to the invention and present for illustration purposes only

This embodiment of this application provides a schematic structural diagram of a communications device 700. As shown in FIG. 7, the communications device 700 includes a transceiver 701, a processor 702, a memory 703, and a bus system 704.

The memory 703 is configured to store a program. Specifically, the program may include program code, and the program code includes a computer operation instruction. The memory 703 may be a random access memory (random access memory, RAM), or may be a non-volatile memory (non-volatile memory), for example, at least one magnetic disk memory. Only one memory is shown in the figure. Certainly, a plurality of memories may alternatively be set as required. The memory 703 may alternatively be a memory in the processor 702.

The memory 703 stores the following elements, executable modules, or data structures, or subsets thereof or extended sets thereof:

an operation instruction: including various types of operation instructions and used to implement various operations, and
an operating system: including various types of system programs and used to implement various types of basic services and process hardware-based tasks.

The processor 702 controls an operation of the communications device 700. The processor 702 may also be referred to as a central processing unit (central processing unit, CPU). During specific application, components of the communications device 700 are coupled together by using the bus system 704. In addition to a data bus, the bus system 704 further includes a power bus, a control bus, a status signal bus, or the like. However, for clear description, various types of buses in the figure are uniformly marked as the bus system 704. For ease of representation, only illustrative depiction is provided in FIG. 7.

The method of the first device disclosed in any one of Embodiment 1 to Embodiment 12 or the method of the second device disclosed in any one of Embodiment 1 to Embodiment 12 may be applied to the processor 702 or implemented by the processor 702. The processor 702 may be an integrated circuit chip and has a signal processing capability. In an implementation process, steps in the foregoing methods may be implemented by using a hardware integrated logical circuit in the processor 702 or by using instructions in a form of software. The processor 702 may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, steps, and logical block diagrams that are disclosed in the embodiments of this application. The general-purpose processor may be a microprocessor, or the processor may be any conventional processor or the like. Steps of the methods disclosed with reference to the embodiments of this application may be embodied as being directly executed and accomplished by a hardware decoding processor, or being executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory 703. The processor 702 reads information from the memory 703, and performs the method steps of the first device in combination with hardware thereof according to any one of Embodiment 1 to Embodiment 12, or performs the method steps of the second device in combination with hardware thereof according to any one of Embodiment 1 to Embodiment 12.

The communications device 700 provided in this embodiment can determine, based on different cases, bits for feedback, thereby balancing communication efficiency and feedback overheads in a communications system.

A person skilled in the art may further understand that various illustrative logical blocks (illustrative logic block) and steps (step) that are listed in the embodiments of this application may be implemented by using electronic hardware, computer software, or a combination thereof. In order to clearly display the interchangeability (interchangeability) between the hardware and the software, functions of the foregoing various illustrative components (illustrative components) and steps have been generally described. Whether the functions are implemented by using hardware or software depends on particular applications and a design requirement of the entire system. A person of ordinary skill in the art may use various methods to implement the described functions for each particular application, but it should not be considered that the implementation goes beyond the protection scope of the embodiments of the present invention.

The various illustrative logical blocks, modules, and circuits described in the embodiments of this application may implement or operate the described functions by using a general-purpose processing unit, a digital signal processing unit, an application-specific integrated circuit (ASIC), a field programmable gate array (FPGA) or another programmable logical apparatus, a discrete gate or transistor logic, a discrete hardware component, or a design of any combination thereof. The general-purpose processing unit may be a microprocessing unit. Optionally, the general-purpose processing unit may be any conventional processing unit, controller, microcontroller, or state machine. The processing unit may be implemented by a combination of computing apparatuses, such as a digital signal processing unit and a microprocessing unit, a plurality of microprocessing units, one or more microprocessing units with a digital signal processing unit core, or any other similar configuration.

Steps of the methods or algorithms described in the embodiments of this application may be directly embedded into hardware, a software module executed by the processing unit, or a combination thereof. The software module may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may connect to a processing unit so that the processing unit may read information from the storage medium and write information into the storage medium. Alternatively, the storage medium may further be integrated into the processing unit. The processing unit and the storage medium may be arranged in an ASIC, and the ASIC may be arranged in a user terminal. Alternatively, the processing unit and the storage medium may be arranged in different components of the user terminal.

In one or more example designs, the functions described in the embodiments of the present invention may be implemented by using hardware, software, firmware, or any combination thereof. If the present invention is implemented by using software, these functions may be stored in a computer-readable medium or are transmitted to the computer-readable medium in a form of one or more instructions or code. The computer-readable medium is either a computer storage medium or a communications medium that enables a computer program to move from one place to another. The storage medium may be an available medium that may be accessed by any general-purpose or special computer. For example, such a computer-readable medium may include but is not limited to a RAM, a ROM, an EEPROM, a CD-ROM or another optical disc storage, a disk storage or another magnetic storage apparatus, or any other medium that may be used to carry or store program code, where the program code is in a form of an instruction or a data structure or in another form that can be read by a general-purpose or special computer or a general-purpose or special processing unit. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is also included in a defined computer-readable medium. The disc (disk) and the disk (disc) include a compressed disk, a laser disk, an optical disc, a DVD, a floppy disk, and a Blu-ray disc. The disk generally copies data in a magnetic manner, and the disc generally copies data optically in a magnetic manner. The foregoing combination may also be included in the computer-readable medium.

According to the foregoing descriptions of this specification in the present invention, technologies in the art may use or implement the content of the present invention. Any modification based on the disclosed content shall be considered obvious in the art. The basic principles described in the present invention may be applied to other variations without departing from the essence and scope of the present invention. Therefore, the content disclosed in the present invention is not limited to the described embodiments and designs but may also be extended to a maximum scope that is consistent with the principles and disclosed new features of the present invention, said maximum scope being defined by the appended claims.

**Claims**

1.  A feedback method in a communications system, wherein the communications system comprises a first device and a second device, and the method comprises:

    receiving (501), by the first device, data sent by the second device; and
    sending (502), by the first device to the second device, feedback information indicating whether the data is successfully received, wherein a quantity of bits of the feedback information is associated with a size of a transmission time unit in the communications system,
    **characterized in that**
    either the communications system is an LTE system and the transmission time unit is a transmission time interval, TTI;
    or the communications system is an NR/5G system and the transmission time unit is a slot, a time domain symbol, or a mini slot including one or more time domain symbols, or integrates a plurality of slots or mini slots, wherein the quantity of bits of the feedback information comprises:
    when an additional demodulation reference signal, DMRS, or a DMRS with a high time domain density is configured for the first device, a plurality of bits is used for feedback; and otherwise, when the additional DMRS or the DMRS with a high time domain density is not configured for the first device, 1 bit used for feedback.

2.  The method according to claim 1, wherein the size of the transmission time unit is determined by at least one of the following parameters: a subcarrier spacing of the communications system and a quantity of time domain symbols in the transmission time unit.

3.  A feedback method in a communications system, wherein the communications system comprises a first device and a second device, and the method comprises:

    sending (501), by the second device, data to the first device; and
    receiving (502), by the second device, feedback information that is sent by the first device and that indicates whether the data is successfully received, wherein a quantity of bits of the feedback information is associated with a size of a transmission time unit in the communications system,
    **characterized in that**
    either the communications system is an LTE system and the transmission time unit is a transmission time interval, TTI,
    or the communications system is an NR/5G system and the transmission time unit is a slot, a time domain symbol, or a mini slot including one or more time domain symbols, or integrates a plurality of slots or mini slots, wherein the quantity of bits of the feedback information comprises:
    when an additional demodulation reference signal, , DMRS, or a DMRS with a high time domain density is configured for the first device, a plurality of bits is used for feedback; and otherwise, when the additional DMRS or the DMRS with a high time domain density is not configured for the first device, 1 bit used for feedback

4. The method according to claim 3, wherein the size of the transmission time unit is determined by at least one of the following parameters: a subcarrier spacing of the communications system and a quantity of time domain symbols in the transmission time unit.

5. A first device, belonging to a communications system, wherein the communications system further comprises a second device, and the first device comprises a processor (702) and a transceiver (701), wherein

the processor (702) is configured to receive, by using the transceiver (701), data sent by the second device; and to send, to the second device by using the transceiver (701), feedback information indicating whether the data is successfully received, wherein a quantity of bits of the feedback information is associated with a size of a transmission time unit in the communications system,
**characterized in that**
either the communications system is an LTE system and the transmission time unit is a transmission time interval, TTI,
or the communications system is an NR/5G system and the transmission time unit is a slot, a time domain symbol, or a mini slot including one or more time domain symbols, or integrates a plurality of slots or mini slots; wherein the quantity of bits of the feedback information comprises:when an additional demodulation reference signal, DMRS, or a DMRS with a high time domain density is configured for the first device, a plurality of bits is used for feedback; and otherwise, when the additional DMRS or the DMRS with a high time domain density is not configured for the first device, 1 bit is used for feedback.

6. The first device according to claim 5, wherein the size of the transmission time unit is determined by at least one of the following parameters: a subcarrier spacing of the communications system and a quantity of time domain symbols in the transmission time unit.

7. A second device, belonging to a communications system, wherein the communications system further comprises a first device, and the second device comprises a processor (702) and a transceiver (701), wherein

the processor (702) is configured to send, by using the transceiver (701), data to the first device; and to receive, by using the transceiver (701), feedback information that is sent by the first device and that indicates whether the data is successfully received, wherein a quantity of bits of the feedback information is associated with a size of a transmission time unit in the communications system,
**characterized in that**
either the communications system is an LTE system and the transmission time unit is a transmission time interval, TTI,
or the communications system is an NR/5G system and the transmission time unit is a slot, a time domain symbol, or a mini slot including one or more time domain symbols, or integrates a plurality of slots or mini slots; wherein the quantity of bits of the feedback information comprises:
when an additional demodulation reference signal, DMRS, or a DMRS with a high time domain density is configured for the first device, a plurality of bits is used for feedback; and otherwise, when the additional DMRS or the DMRS with a high time domain density is not configured for the first device, 1 bit is used for feedback .

8. The second device according to claim 7, wherein the size of the transmission time unit is determined by at least one of the following parameters: a subcarrier spacing of the communications system and a quantity of time domain symbols in the transmission time unit.

**Patentansprüche**

1. Feedback-Verfahren in einem Kommunikationssystem, wobei das Kommunikationssystem eine erste Vorrichtung und eine zweite Vorrichtung umfasst und das Verfahren umfasst:

Empfangen (501), durch die erste Vorrichtung, von durch die zweite Vorrichtung gesendeten Daten und Senden (502), durch die erste Vorrichtung an die zweite Vorrichtung, von Feedback-Informationen, die angeben, ob die Daten erfolgreich empfangen werden, wobei eine Menge von Bits der Feedback-Informationen einer Größe einer Übertragungszeiteinheit im Kommunikationssystem zugeordnet ist,
**dadurch gekennzeichnet, dass**
entweder das Kommunikationssystem ein LTE-System ist und die Übertragungszeiteinheit ein Übertragungszeitintervall, TTI, ist oder das Kommunikationssystem ein NR/5G-System ist und die Übertragungszeiteinheit ein Schlitz, ein Zeitbereichssymbol oder ein Minischlitz, einschließlich eines oder mehrerer Zeitbereichssymbole, ist oder eine Vielzahl von Schlitzen oder Minischlitzen integriert, wobei die Menge von Bits der Feedback-Informationen umfasst: wenn ein zusätzliches Demodulationsreferenzsignal, DMRS, oder ein DMRS mit einer hohen Zeitbereichsdichte für die erste Vorrichtung ausgelegt ist, wird eine Vielzahl von Bits für ein Feedback verwendet; und ansonsten, wenn das zusätzliche DMRS oder das DMRS mit einer hohen Zeitbereichsdichte nicht für die erste Vorrichtung ausgelegt ist, wird 1 Bit für ein Feedback verwendet.

2. Verfahren nach Anspruch 1, wobei die Größe der Übertragungszeiteinheit durch zumindest einen der folgenden Parameter bestimmt wird: eine Unterträgerbeabstandung des Kommunikationssystems und eine Menge von Zeitbereichssymbolen in der Übertragungszeiteinheit.

3. Feedback-Verfahren in einem Kommunikationssystem, wobei das Kommunikationssystem eine erste Vorrichtung und eine zweite Vorrichtung umfasst und das Verfahren umfasst:

Senden (501), durch die zweite Vorrichtung, von Daten an die erste Vorrichtung und Empfangen (502), durch die zweite Vorrichtung, von Feedback-Informationen, die durch die erste Vorrichtung gesendet werden und die angeben, ob die Daten erfolgreich empfangen werden, wobei eine Menge von Bits der Feedback-Informationen einer Größe einer Übertragungszeiteinheit im Kommunikationssystem zugeordnet ist,
**dadurch gekennzeichnet, dass**
entweder das Kommunikationssystem ein LTE-System ist und die Übertragungszeiteinheit ein Übertragungszeitintervall, TTI, ist oder das Kommunikationssystem ein NR/5G-System ist und die Übertragungszeiteinheit ein Schlitz, ein Zeitbereichssymbol oder ein Minischlitz, einschließlich eines oder mehrerer Zeitbereichssymbole, ist oder eine Vielzahl von Schlitzen oder Minischlitzen integriert,
wobei die Menge von Bits der Feedback-Informationen umfasst:
wenn ein zusätzliches Demodulationsreferenzsignal, DMRS, oder ein DMRS mit einer hohen Zeitbereichsdichte für die erste Vorrichtung ausgelegt ist, wird eine Vielzahl von Bits für ein Feedback verwendet; und ansonsten, wenn das zusätzliche DMRS oder das DMRS mit einer hohen Zeitbereichsdichte nicht für die erste Vorrichtung ausgelegt ist, wird 1 Bit für ein Feedback verwendet.

4. Verfahren nach Anspruch 3, wobei die Größe der Übertragungszeiteinheit durch zumindest einen der folgenden Parameter bestimmt wird: eine Unterträgerbeabstandung des Kommunikationssystems und eine Menge von Zeitbereichssymbolen in der Übertragungszeiteinheit.

5. Erste Vorrichtung, die zu einem Kommunikationssystem gehört, wobei das Kommunikationssystem ferner eine zweite Vorrichtung umfasst und die erste Vorrichtung einen Prozessor (702) und einen Transceiver (701) umfasst, wobei

der Prozessor (702) ausgelegt ist zum Empfangen, durch Verwenden des Transceivers (701), von Daten, die durch die zweite Vorrichtung gesendet werden; und zum Senden, an die zweite Vorrichtung durch Verwenden des Transceivers (701), von Feedback-Informationen, die angeben, ob die Daten erfolgreich empfangen werden, wobei eine Menge von Bits der Feedback-Informationen einer Größe einer Übertragungszeiteinheit im Kommunikationssystem zugeordnet ist,
**dadurch gekennzeichnet, dass**
entweder das Kommunikationssystem ein LTE-System ist und die Übertragungszeiteinheit ein Übertragungszeitintervall, TTI, ist
oder das Kommunikationssystem ein NR/5G-System ist und die Übertragungszeiteinheit ein Schlitz, ein Zeitbereichssymbol oder ein Minischlitz, einschließlich eines oder mehrerer Zeitbereichssymbole, ist oder eine Vielzahl von Schlitzen oder Minischlitzen integriert;
wobei die Menge von Bits der Feedback-Informationen umfasst: wenn ein zusätzliches Demodulationsreferenzsignal, DMRS, oder ein DMRS mit einer hohen Zeitbereichsdichte für die erste Vorrichtung ausgelegt ist, wird eine Vielzahl von Bits für ein Feedback verwendet; und ansonsten, wenn das zusätzliche DMRS oder das DMRS mit einer hohen Zeitbereichsdichte nicht für die erste Vorrichtung ausgelegt ist, wird 1 Bit für ein Feedback verwendet.

6. Erste Vorrichtung nach Anspruch 5, wobei die Größe der Übertragungszeiteinheit durch zumindest einen der folgenden Parameter bestimmt wird: eine Unterträgerbeabstandung des Kommunikationssystems und eine Menge von Zeitbereichssymbolen in der Übertragungszeiteinheit.

7. Zweite Vorrichtung, die zu einem Kommunikationssystem gehört, wobei das Kommunikationssystem ferner eine erste Vorrichtung umfasst und die zweite Vorrichtung einen Prozessor (702) und einen Transceiver (701) umfasst, wobei

der Prozessor (702) ausgelegt ist zum Senden, durch Verwenden des Transceivers (701), von Daten an die erste Vorrichtung, und zum Empfangen, durch Verwenden des Transceivers (701), von Feedback-Informationen, die durch die erste Vorrichtung gesendet werden und die angeben, ob die Daten erfolgreich empfangen werden, wobei eine Menge von Bits der Feedback-Informationen einer Größe einer Übertragungszeiteinheit im Kommunikationssystem zugeordnet ist,
**dadurch gekennzeichnet, dass**
entweder das Kommunikationssystem ein LTE-System ist und die Übertragungszeiteinheit ein Übertragungszeitintervall, TTI, ist oder das Kommunikationssystem ein NR/5G-System ist und die Übertragungszeiteinheit ein Schlitz, ein Zeitbereichssymbol oder ein Minischlitz, einschließlich eines oder mehrerer Zeitbereichssymbole, ist oder eine Vielzahl von Schlitzen oder Minischlitzen integriert;
wobei die Menge von Bits der Feedback-Informationen umfasst:
wenn ein zusätzliches Demodulationsreferenzsignal, DMRS, oder ein DMRS mit einer hohen Zeitbereichsdichte für die erste Vorrichtung ausgelegt ist, wird eine Vielzahl von Bits für ein Feedback verwendet, und ansonsten, wenn das zusätzliche DMRS oder das DMRS mit einer hohen Zeitbereichsdichte nicht für die erste Vorrichtung ausgelegt ist, wird 1 Bit für ein Feedback verwendet.

8. Zweite Vorrichtung nach Anspruch 7, wobei die Größe der Übertragungszeiteinheit durch zumindest einen der folgenden Parameter bestimmt wird: eine Unterträgerbeabstandung des Kommunikationssystems und eine Menge von Zeitbereichssymbolen in der Übertragungszeiteinheit.

**Revendications**

1. Procédé de rétroaction dans un système de communication, le système de communication comprenant un premier dispositif et un second dispositif, et le procédé comprenant :

la réception (501), par le premier dispositif, de données envoyées par le second dispositif ; et
l'envoi (502), par le premier dispositif au second dispositif, d'informations de rétroaction indiquant si les données sont reçues avec succès, une quantité de bits des informations de rétroaction étant associée à une taille d'une unité de temps de transmission dans le système de communication,
**caractérisé en ce que**
soit le système de communication est un système LTE et l'unité de temps de transmission est un intervalle de temps de transmission, TTI ;
soit le système de communication est un système NR/5G et l'unité de temps de transmission est un créneau temporel, un symbole de domaine temporel, ou un mini-créneau temporel comprenant un ou plusieurs symboles de domaine temporel, ou intègre une pluralité de créneaux temporels ou de mini-créneaux temporels,
la quantité de bits des informations de rétroaction comprenant :
lorsqu'un signal de référence de démodulation, DMRS, supplémentaire ou un DMRS avec une densité de domaine temporel élevée est configuré pour le premier dispositif, une pluralité de bits est utilisée pour la rétroaction ; et sinon, lorsque le DMRS supplémentaire ou le DMRS avec une densité de domaine temporel élevée n'est pas configuré pour le premier dispositif, 1 bit est utilisé pour la rétroaction.

2. Procédé selon la revendication 1, la taille de l'unité de temps de transmission étant déterminée par au moins l'un des paramètres suivants : un espacement de sous-porteuse du système de communication et une quantité de symboles de domaine temporel dans l'unité de temps de transmission.

3. Procédé de rétroaction dans un système de communication, le système de communication comprenant un premier dispositif et un second dispositif, et le procédé comprenant :

l'envoi (501), par le second dispositif, de données au premier dispositif ; et
la réception (502), par le second dispositif, d'informations de rétroaction qui sont envoyées par le premier dispositif et qui indiquent si les données sont reçues avec succès, une quantité de bits des informations de rétroaction étant associée à une taille d'une unité de temps de transmission dans le système de communication, **caractérisé en ce que**

soit le système de communication est un système LTE et l'unité de temps de transmission est un intervalle de temps de transmission, TTI,

soit le système de communication est un système NR/5G et l'unité de temps de transmission est un créneau temporel, un symbole de domaine temporel, ou un mini-créneau temporel comprenant un ou plusieurs symboles de domaine temporel, ou intègre une pluralité de créneaux temporels ou de mini-créneaux temporels,

la quantité de bits des informations de rétroaction comprenant :

lorsqu'un signal de référence de démodulation, DMRS, supplémentaire ou un DMRS avec une densité de domaine temporel élevée est configuré pour le premier dispositif, une pluralité de bits est utilisée pour la rétroaction ; et sinon, lorsque le DMRS supplémentaire ou le DMRS avec une densité de domaine temporel élevée n'est pas configuré pour le premier dispositif, 1 bit est utilisé pour la rétroaction.

4. Procédé selon la revendication 3, la taille de l'unité de temps de transmission étant déterminée par au moins un des paramètres suivants : un espacement de sous-porteuse du système de communication et une quantité de symboles de domaine temporel dans l'unité de temps de transmission.

5. Premier dispositif, appartenant à un système de communication, le système de communication comprenant en outre un second dispositif, et le premier dispositif comprenant un processeur (702) et un émetteur-récepteur (701),

le processeur (702) étant configuré pour recevoir, en utilisant l'émetteur-récepteur (701), des données envoyées par le second dispositif, et pour envoyer, au second dispositif en utilisant l'émetteur-récepteur (701), des informations de rétroaction indiquant si les données sont reçues avec succès, une quantité de bits des informations de rétroaction étant associée à une taille d'une unité de temps de transmission dans le système de communication,

**caractérisé en ce que**

soit le système de communications est un système LTE et l'unité de temps de transmission est un intervalle de temps de transmission, TTI,

soit le système de communication est un système NR/5G et l'unité de temps de transmission est un créneau temporel, un symbole de domaine temporel ou un mini-créneau temporel comprenant un ou plusieurs symboles de domaine temporel, ou intègre une pluralité de créneaux temporels ou mini-créneaux temporels,

la quantité de bits des informations de rétroaction comprenant : lorsqu'un signal de référence de démodulation, DMRS, supplémentaire ou un DMRS avec une densité de domaine temporel élevée est configuré pour le premier dispositif, une pluralité de bits est utilisée pour la rétroaction ; et sinon, lorsque le DMRS supplémentaire ou le DMRS avec une densité de domaine temporel élevée n'est pas configuré pour le premier dispositif, 1 bit est utilisé pour la rétroaction.

6. Premier dispositif selon la revendication 5, la taille de l'unité de temps de transmission étant déterminée par au moins l'un des paramètres suivants : un espacement de sous-porteuse du système de communication et une quantité de symboles de domaine temporel dans l'unité de temps de transmission.

7. Second dispositif, appartenant à un système de communication, le système de communication comprenant en outre un premier dispositif, et le second dispositif comprenant un processeur (702) et un émetteur-récepteur (701),

le processeur (702) étant configuré pour envoyer, en utilisant l'émetteur-récepteur (701), des données au premier dispositif ; et pour recevoir, en utilisant l'émetteur-récepteur (701), des informations de rétroaction qui sont envoyées par le premier dispositif et qui indiquent si les données sont reçues avec succès, une quantité de bits des informations de rétroaction étant associée à une taille d'une unité de temps de transmission dans le système de communications,

**caractérisé en ce que**

soit le système de communication est un système LTE et l'unité de temps de transmission est un intervalle de temps de transmission, TTI,

soit le système de communication est un système NR/5G et l'unité de temps de transmission est un créneau temporel, un symbole de domaine temporel, ou un mini-créneau temporel comprenant un ou plusieurs symboles de domaine temporel, ou intègre une pluralité de créneaux temporels ou de mini-créneaux temporels ;

la quantité de bits des informations de rétroaction comprenant :

lorsqu'un signal de référence de démodulation, DMRS, supplémentaire ou un DMRS avec une densité de domaine temporel élevée est configuré pour le premier dispositif, une pluralité de bits est utilisée pour la rétroaction ; et sinon, lorsque le DMRS supplémentaire ou le DMRS avec une densité de domaine temporel élevée n'est pas configuré pour le premier dispositif, 1 bit est utilisé pour la rétroaction.

8. Second dispositif selon la revendication 7, la taille de l'unité de temps de transmission étant déterminée par au moins l'un des paramètres suivants : un espacement de sous-porteuse du système de communication et une quantité de symboles de domaine temporel dans l'unité de temps de transmission.

FIG. 1

FIG. 2

FIG. 3

Time

Time domain
resource

Channel
fluctuation
status

Channel quality
From low to high

FIG. 4(a)

Time

Time domain resource

Channel
fluctuation
status

Channel quality
From low to high

FIG. 4(b)

First
device

Second
device

501. Data

502. Feedback information, where a
quantity of bits of the feedback
information is associated with a size
of a transmission time unit

FIG. 5

Time

Time domain resource

Channel
fluctuation
status

Channel quality
From low to high

FIG. 6(a)

Time domain resource

Channel
fluctuation
status

Channel quality
From low to high

FIG. 6(b)

700

Communications device

702

704

Processor

701

Bus system

Transceiver

703

Memory

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006034277 A1